# EUROPEAN PATENT APPLICATION

(11) **EP 4 679 723 A1**
(43) Date of publication of application: **14.01.2026**
(21) Application number: 25189037.2
(22) Date of filing: 11.07.2025
(51) Int. Cl.: H04B 7/0404

(54) **A USER EQUIPMENT AND NETWORK NOD FOR NON-CODEBOOK BASED UPLINK TRANSMISSION**

(30) Priority: 12.07.2024 GB 202410180
(71) Applicant: Nokia Technologies Oy, 02610 Espoo (FI)
(72) Inventor: KARJALAINEN, Juha Pekka, 88600 Sotkamo (FI); KOSKELA, Timo, 90670 Oulu (FI); HAKOLA, Sami-Jukka, 90540 Oulu (FI); SVENDSEN, Simon, 9220 Aalborg (DK); CAPORAL DEL BARRIO, Samantha, 9000 Aalborg (DK)
(74) Representative: Richardt Patentanwälte PartG mbB

(57) **Abstract**

A user equipment, UE, comprising means for determining an antenna port group calibration capability of the UE, wherein the antenna port group calibration capability depends on at least one of phase calibration or amplitude calibration of one or more antenna port groups of the UE.

## Description

### TECHNOLOGICAL FIELD

Examples of the disclosure relate to a user equipment and network node. Some relate to a user equipment and network node for non-codebook based uplink transmission.

### BACKGROUND

In uplink transmission, precoding is applied to signals to compensate for the response (time domain) or transfer function (frequency domain) of the uplink channel and of the transmission circuitry.

Two transmission schemes are provided for uplink transmission: codebook-based transmission and non-codebook-based transmission.

### BRIEF SUMMARY

According to various, but not necessarily all, examples there is provided a user equipment, UE, comprising means for determining an antenna port group calibration capability of the UE, wherein the antenna port group calibration capability depends on at least one of phase calibration or amplitude calibration of one or more antenna port groups of the UE.

In some but not necessarily all examples, determining the multi-antenna port calibration capability comprises generating a multi-antenna port calibration capability indicator associated with non-codebook-based precoding for uplink communications between the UE and a network, wherein the multi-antenna port calibration capability indicator indicates a capability of the UE to perform relative phase and/or amplitude calibration between multiple antenna ports of the UE.

In some but not necessarily all examples, determining the multi-antenna port calibration capability comprises measuring one or more reference signals using one or more antenna ports.

In some but not necessarily all examples, determining the multi-antenna port calibration capability comprises measuring symbols of the one or more reference signals.

In some but not necessarily all examples, determining the multi-antenna port calibration capability comprises comparing a measurement of a first measured reference signal against a measurement of a second measured reference signal, wherein the first reference signal is a downlink reference signal and the second reference signal is at least one of: a different measured reference signal; a reference signal measured at a different antenna port to the first measured reference signal; an uplink reference signal; or an expected reference signal.

In some but not necessarily all examples, determining the multi-antenna port pre-coding values comprises determining a difference between one or more dynamic characteristics of two or more antenna ports based, at least in part, on a comparison of a measurement of one or more downlink reference signals measured at the first antenna port and the second antenna port.

In some but not necessarily all examples, determining the multi-antenna port calibration capability comprises determining a difference between one or more dynamic characteristics of a first antenna port of the two or more antenna ports and one or more corresponding dynamic characteristics of a second antenna port of the two or more antenna ports based, at least in part, on a comparison of a measurement of one or more uplink reference signals measured at the first antenna port and a measurement of one or more uplink reference signals measured at the second antenna port.

In some but not necessarily all examples, the one or more dynamic characteristics comprise at least one of: directivity; complex impedance; angular direction of maximum gain; phase; amplitude.

In some but not necessarily all examples, the user equipment comprises means for identifying one or more valid combinations of two or more antenna ports based, at least in part, on the comparison of the measurement of the first measured reference signal and the measurement of the second measured reference signal.

In some but not necessarily all examples, the identification of one or more valid combinations of two or more antenna ports is based, at least in part, on a comparison, for multiple antenna ports of the two or more antenna ports, of a measured downlink reference signal at the antenna port and a measured uplink reference signal at one or more antenna ports.

In some but not necessarily all examples a combination of two or more antenna ports is valid and its calibration capability is fully-calibrated if the UE is capable of performing relative phase and/or amplitude calibration between the two or more antenna ports.

In some but not necessarily all examples, a combination of two or more antenna ports is valid and its calibration capability is partially-calibrated if the UE is capable of performing relative phase and/or amplitude calibration between a subset of the two or more antenna ports.

In some but not necessarily all examples, a combination of two or more antenna ports is not valid and its calibration capability is non-calibrated if the UE is not capable of performing relative phase and/or amplitude calibration between the two or more antenna ports within an antenna port group.

In some but not necessarily all examples, the user equipment comprises means for determining one or more preferred combinations of one or more antenna ports, based at least in part on the identified one or more valid combinations of two or more antenna ports.

In some but not necessarily all examples, the user equipment comprises means for determining one or more candidate combinations of one or more antenna ports, based at least in part on the identified one or more valid combinations of two or more antenna ports.

In some but not necessarily all examples, determining one or more preferred combinations of one or more antenna ports and/or one or more candidate combinations of one or more antenna ports is based on a calibration capability of the one or more combinations of one or more antenna ports.

In some but not necessarily all examples, wherein the means for determining one or more preferred combinations of one or more antenna ports and/or the means for determining one or more candidate combinations of one or more antenna ports are configured to select one or more valid and fully-calibrated combinations of one or more antenna ports as preferred combinations and/or candidate combinations in preference to one or more valid and partially-calibrated combinations of one or more antenna ports and/or
selecting one or more valid and partially-calibrated combinations of one or more antenna ports as preferred combinations and/or candidate combinations in preference to one or more not valid and non-calibrated combinations of one or more antenna ports.

In some but not necessarily all examples, the means for determining one or more preferred combinations of one or more antenna ports and/or the means for determining one or more candidate combinations of one or more antenna ports are configured to:
measure an RSRP of the one or more valid combinations of one or more antenna ports; and determine one or more preferred combinations of one or more antenna ports and/or one or more candidate combinations of one or more antenna ports in dependence upon the measured RSRP.

In some but not necessarily all examples, the user equipment comprises means for associating the one or more preferred combinations and/or the one or more candidate combinations of antenna ports with one or more antenna port groups, wherein an antenna port group comprises at least the antenna ports of its associated one or more combinations of antenna ports.

In some but not necessarily all examples, the user equipment comprises means for determining an intra-group calibration indicator for one or more of the antenna port groups, wherein an intra-group calibration indicator indicates a capability of the UE to perform relative phase and/or amplitude calibration between multiple antenna ports within an antenna port group, in dependence upon a calibration capability of the one or more combinations of antenna ports associated with the antenna port group.

In some but not necessarily all examples, the user equipment comprises means for identifying an antenna port group as having an intra-group calibration capability of fully-calibrated, partially-calibrated, or non-calibrated in dependence upon a calibration capability of the associated one or more combinations of antenna ports.

In some but not necessarily all examples, the user equipment comprises means for determining an inter-group calibration indicator for a combination of two or more antenna port groups, wherein an inter-group calibration indicator indicates a capability of the UE to perform relative phase and/or amplitude calibration between two or more antenna port groups, in dependence upon a calibration capability of the one or more combinations of antenna ports associated with the two or more antenna port groups.

In some but not necessarily all examples, generating the multi-antenna port calibration capability indicator comprises generating an indication of: one or more antenna port groups; an intra-group calibration indicator of the one or more antenna port groups; and an inter-group calibration indicator of one or more combinations of the one or more antenna port groups.

In some but not necessarily all examples, the user equipment means for: obtaining an indication to initiate determination of the multi-antenna port calibration capability; and initiating determination of the multi-antenna port calibration capability based on the indication.

In some but not necessarily all examples, the user equipment comprises means for receiving the indication from a network node.

In some but not necessarily all examples, the user equipment comprises means for generating the indication based on a trigger condition being met.

According to various, but not necessarily all, embodiments there is provided an apparatus comprising
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function.

### BRIEF DESCRIPTION

Some examples will now be described with reference to the accompanying drawings in which:
FIG. 1 shows an example of the subject matter described herein;
FIGs 2A and 2B show another example of the subject matter described herein;
FIG. 3 shows an example of the subject matter described herein;
FIGs 4A and 4B show another example of the subject matter described herein;
FIGs 5A and 5B show another example of the subject matter described herein;
FIG 6 shows another example of the subject matter described herein;
FIG 7 shows another example of the subject matter described herein;
FIGS 8A and 8B show another example of the subject matter described herein;
FIGs 9A and 9B show another example of the subject matter described herein;
FIG 10 shows another example of the subject matter described herein; and
FIG. 11 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The Figures illustrate a user equipment, UE, comprising means for transmitting, to a network, an antenna port group calibration capability associated with non-codebook based precoding for uplink communications between the UE and the network, wherein the antenna port group calibration capability indicates information associated with at least one of phase calibration or amplitude calibration of one or more antenna port groups of the UE.

This provides the technical effect of enabling efficient utilization of non-codebook based operation for 6G with different vendor specific transmission (TX) calibration capabilities. This may be enabled in, for example, SRS, PUSCH, PUCCH operation.

The apparatus may be for informing a network of a calibration capability for facilitating non-codebook based precoding for uplink communications between the UE and the network.

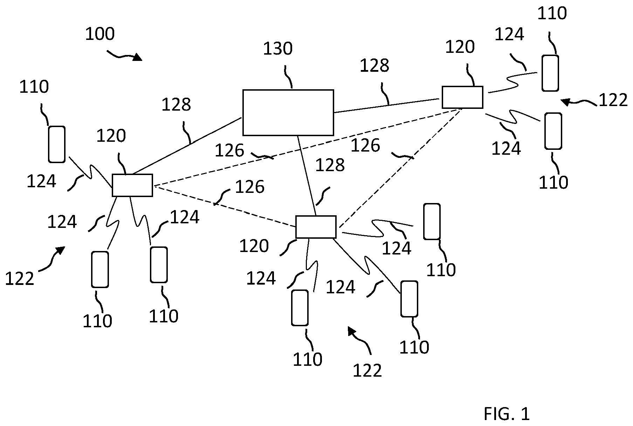

Fig. 1 illustrates an example of a network 100 comprising a plurality of network entities including terminal apparatus 110, node apparatus 120 and one or more network apparatus 130. The terminal apparatus 110 and node apparatus 120 communicate 124 with each other. The one or more network apparatus 130 communicate 128 with the node apparatus 120.

In some examples the one or more network apparatus 130 communicate with the terminal apparatus 110. The one or more network apparatus 130 can, in some examples, communicate with each other. The one or more node apparatus 120 can, in some examples, communicate 126 with each other.

The network 100 can be a cellular network comprising a plurality of cells 122 each served by a node apparatus 120. In this example, the interface between the terminal apparatus 110 and a node apparatus 120 defining a cell 122 is a wireless interface 124.

The node apparatus 120 comprises one or more cellular radio transceivers. The terminal apparatus 110 comprises one or more cellular radio transceivers.

In the example illustrated the cellular network 100 is a third generation Partnership Project (3GPP) network in which the terminal apparatus 110 are user equipment (UE) and the node apparatus 120 can be access nodes such as base stations.

A user equipment comprises a mobile equipment. Where reference is made to user equipment that reference includes and encompasses, wherever possible, a reference to mobile equipment.

In some examples, during operation, a user equipment 110 comprises a mobile equipment comprising a smart card for authentication/encryption etc. such as a Subscriber Identity Module (SIM). In some examples, during operation, a user equipment 110 comprises mobile equipment comprising circuitry embedded as part of the user equipment 110 for authentication/ encryption such as software SIM.

The node apparatus 120 can be any suitable access node such as a base station or transmission reception point. The node apparatus 120 can be a network element responsible for radio transmission and reception in one or more cells 122, to or from the UE 110. The node apparatus 120 can be a network element in a Radio Access Network (RAN), an Open-Radio Access Network (O-RAN) or any other suitable type of network.

The network apparatus 130 can be part of a core network. The network apparatus 130 can be configured to manage functions relating to connectivity for the UEs 110. For example, the network apparatus 130 can be configured to manage functions such as connectivity, mobility, authentication, authorization and/or other suitable functions. In some examples the network apparatus 130 can comprise an Access and Mobility management Function (AMF) and/or a User Plane Function (UPF) or any other suitable entities.

In the example of Fig. 1 the network apparatus 130 is shown as a single entity. In some examples the network apparatus 130 could be distributed across a plurality of entities. For example, the network apparatus 130 could be cloud based or distributed in any other suitable manner. The network apparatus 130 can be a core network node.

The network 100 can be a 4G or 5G network, for example. It can for example be a New Radio (NR) network that uses gNB or eNB as access nodes 120. New Radio is the 3GPP name for 5G technology. In such cases the node apparatus 120 can comprise gNodeBs (gNBs) 120 configured to provide user plane and control plane protocol terminations towards the UE 110 and/or to perform any other suitable functions. The gNBs 120 are interconnected with each other by means of an X2/Xn interface 126. The gNBs are also connected by means of the N2 interface 128 to the network apparatus 130. The gNBs can be connected to an AMF or any other suitable network apparatus 130. Other types of networks and interfaces could be used in other examples. Other types of network could comprise next generation mobile and communication network, for example, a 6G network.

There is ongoing work to support simultaneous transmission (TX) in the uplink (UL) to enable UL MIMO operation.

In UL TX, precoding is applied to signals to compensate for the response (time domain) or transfer function (frequency domain) of the UL channel and of the TX circuitry.

Two transmission schemes are provided for UL TX: codebook-based transmission and non-codebook-based transmission. The transmission scheme used determines how precoding is determined.

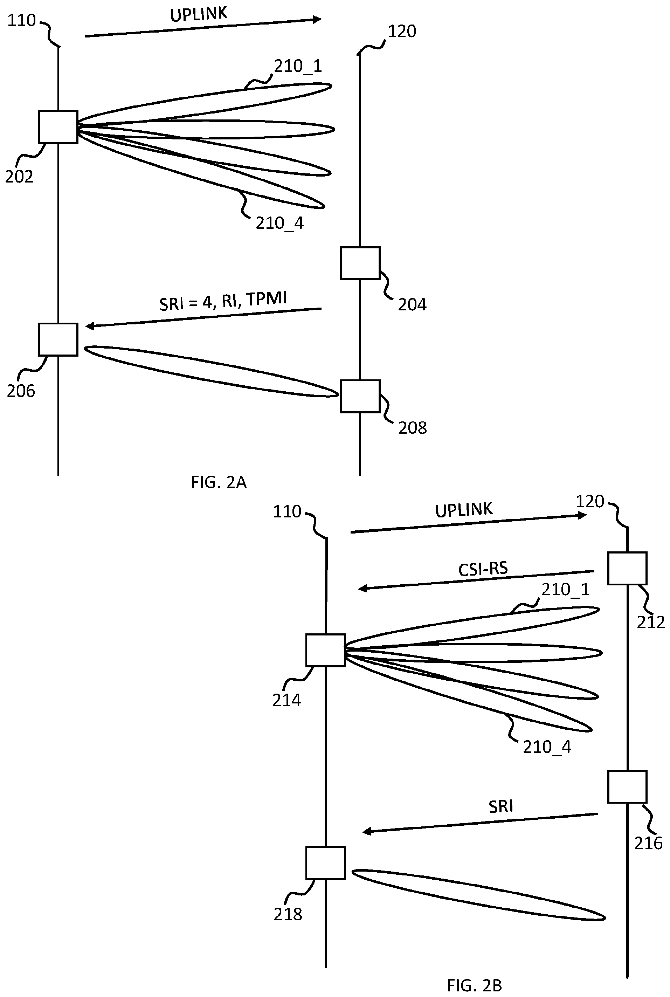

In codebook-based transmission, the network sends a Transmit Precoding Matrix Indicator (TPMI) to the UE to control the UL precoding at the UE. This procedure, illustrated in FIG. 2A, comprises:
At block 202, SRS resources 210 are transmitted from UE to network. The SRS can be sent sequentially or simultaneously, depending on the UE capabilities. However, simultaneously transmitted SRSs will reduce the coverage due to the requirements for maximum combined Tx power at the UE.

At block 204, the network estimates the channel based on previous step and determines best SRS, SRS resource indicator (SRI) and rank.

At block 206, the network transmits the SRI, rank and TPMI to the UE

At block 208, PUSCH transmission uses the latest indicated precoding at the UE based on previous step.

A drawback of this procedure is that the UE relies on a pre-determined codebook. This codebook was derived under the assumption of Uniform Linear array (ULA) of omnidirectional cross pol elements at the UE side leading to a Discrete Fourier Transform (DFT) based "grid of beams" (GOB). However, UE antenna arrays are not uniform and linear as the antenna's patterns have directive variation of gain and phase, as well as inter-antenna distances that are rarely half a wavelength (this can go up to 5 wavelengths for 9 GHz for example). This will result in a non-optimal codebook.

In non-codebook-based transmission, the precoding to be used is determined at the UE by using DL CSI-RS and leveraging DL-UL reciprocity at the UE TX.

This procedure, illustrated in FIG. 2B, is based on the following steps:
At block 212, CSI-RSs are sent from the network to the UE, where the UE estimates the channel and calculates a precoder for UL at the UE.

At block 214, pre-coded SRSs are sent in UL with UE generated weights to the network based on previous steps.

At block 216, the network performs a selection of the best SRS and indicates this to the UE using the SRI.

At block 218, PUSCH transmission uses the latest calculated precoding at the UE based on the indicated SRI.

This procedure assumes a full channel reciprocity between UL and DL. However UL phase difference between antenna ports can dynamically vary independently from the DL phase difference.

Therefore, in order for the UE to carry out non-codebook-based transmission, different UE TX antenna ports must be calibrated in the phase and amplitude domains, such that UE-dependent responses/transfer functions may be compensated for by the precoding.

In examples in which UL TX antenna configurations are known and do not vary, full calibration in the phase and amplitude domains may be assumed, and thus non-codebook-based transmission may be carried out.

To enable support for different UL TX antenna configurations, with different calibration assumptions, information about the ability of the UE to calibrate the TX circuitry response/transfer function is required.

SRS antenna port Switching is a prerequisite for codebook-based UL MIMO.

SRS transmission is also a prerequisite for non-codebook-based UL MIMO. In this case the UE uses multiple antennas with associated weight coefficients for each precoded SRS.

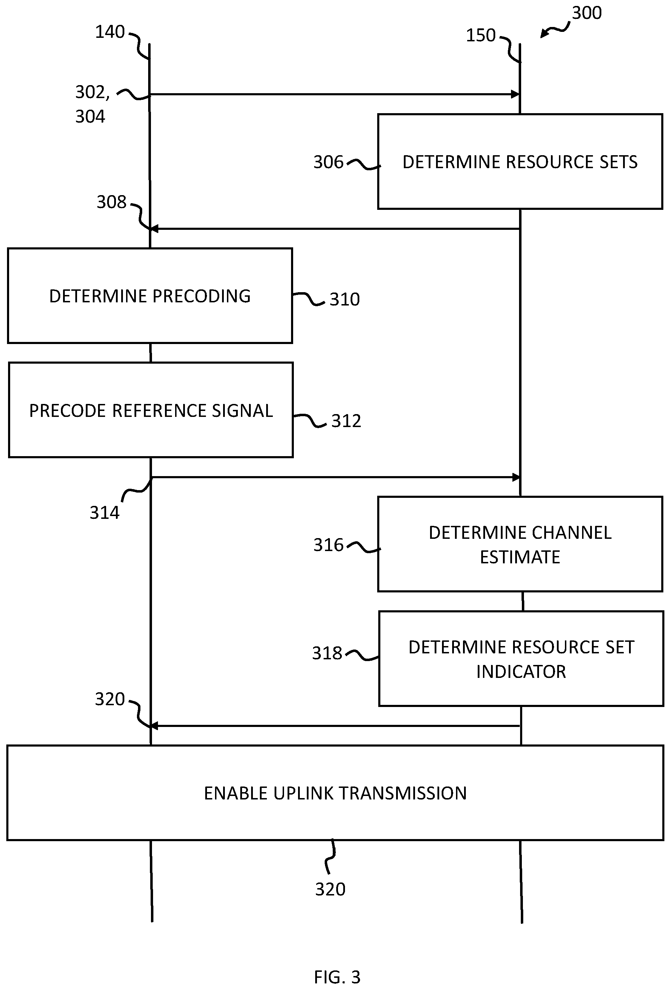

FIG 3 illustrates an example of a method.

In examples, FIG. 3 can be considered to illustrate a plurality of methods. For example, FIG. 3 illustrates one or more actions at a plurality of actors/entities and, in examples, FIG. 3 can be considered to illustrate a plurality of methods performed by the individual actors/entities.

One or more of the features discussed in relation to FIG. 3 can be found in one or more of the other FIGs.

In the example of FIG. 3, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 3 form at least a portion of network 100 as described in relation to FIG. 1.

In the illustrated example, a terminal node 110 and an access node 120 transmit and/or receive one or more signals and/or one or more messages. The access node can comprise a gNodeB (gNB) and the terminal node 110 can comprise a UE 140.

In examples, communications and/or transmissions between elements illustrated in FIG. 3 can proceed via any number of intervening elements, including no intervening elements.

Although one terminal node 110 is illustrated in the example of FIG. 3, in examples any suitable number of terminal nodes 110, for example UEs, can be included. Similarly, in examples, any suitable number of access nodes 120 can be included.

As described herein, a description of a function and/or action should also be considered to disclose enabling, and/or causing, and/or controlling that function and/or action. For example, a description of transmitting information should also be considered to disclose enabling, and/or causing, and/or controlling transmitting/transmission of information.

For example, a description of an apparatus, such as a UE 140, transmitting information should also be considered to disclose at least one controller of the apparatus enabling, and/or causing, and/or controlling the apparatus to transmit the information.

In the illustrated example, the location of blocks indicates the entity performing the functions(s) and/or action(s). For example, block 302 is performed by the terminal node 110, such as a UE 140.

Because FIG. 3 illustrates one or more actions/features of transmitting, FIG. 3 illustrates the corresponding receiving/enabling and/or causing receiving action(s)/feature(s).

For the further discussion of FIG. 3 it will be considered that the terminal node 110 is a UE 140.

From the point of view of the UE 140, at block 302, the method comprises transmitting, to a network, an antenna port group calibration capability associated with non-codebook based precoding for uplink communications between the UE 140 and the network. The antenna port group calibration capability may also be referred to as an antenna port group calibration capability indicator.

The antenna port group calibration capability indicates a capability of the UE 140 to perform relative phase and/or amplitude calibration between multiple antenna ports 300 of the UE 140.

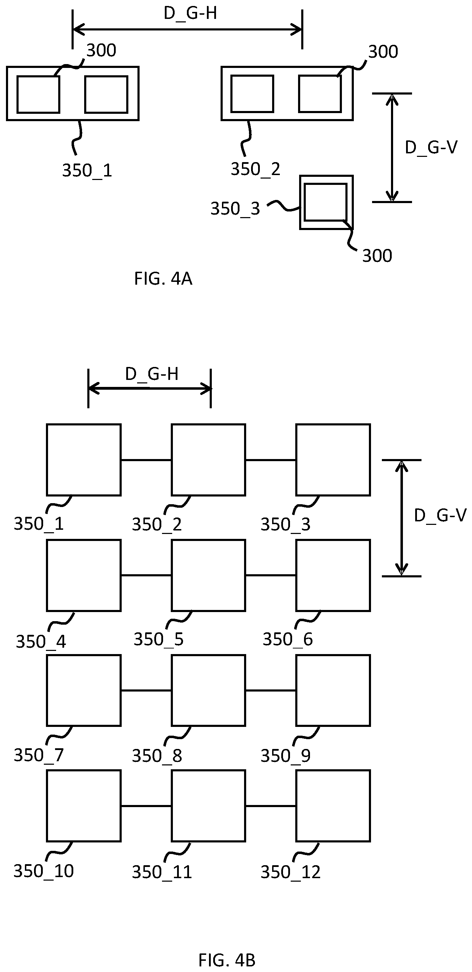

FIGs 4A and 4B illustrate examples of a UE 140 comprising antenna port groups 350. An antenna port group 350 may comprise one or more antenna ports 300.

In some, but not necessarily all, examples, the antenna ports 300 are TX antenna ports. In other examples, the antenna ports 300 comprise TX and RX antenna ports.

In the example of FIG. 4A, the UE 140 comprises three antenna port groups 350. Antenna port groups 350_1 and 350_2 each comprise two antenna ports 300, and antenna port 350_3 comprises one antenna port.

In the example of FIG. 4B, the UE 140 comprises 12 antenna port groups 350, all of which comprise a single antenna port (not illustrated).

It will be appreciated that antenna port groups 350 having different numbers of antenna ports 300 to those illustrated are possible.

As illustrated in FIGs 4A and 4B, parameters D_G-H and D_G-V define inter-antenna port group distances in the horizontal and vertical domains respectively.

Referring back to FIG. 3, in some, but not necessarily all, examples, the antenna port group calibration capability indicates, for an antenna port group 350 comprising multiple antenna ports 300, a capability of the UE 140 to perform relative phase and/or amplitude calibration between antenna ports 300 of the antenna port group 350.

In examples, the antenna port group calibration capability indicates an antenna port group 350 and/or a combination of antenna port groups 350 as fully-calibrated, partially-calibrated, or non-calibrated.

An antenna port group 350 or combination of two or more antenna port groups 350 is fully-calibrated if the UE 140 is capable of performing relative phase and/or amplitude calibration between the antenna ports 300 of the antenna port group 350 or the combination of two or more antenna port groups 350.

An antenna port group 350 or combination of two or more antenna port groups 350 is partially-calibrated if the UE 140 is capable of performing relative phase and/or amplitude calibration between a subset of the antenna ports 300 of the antenna port group 350 or the combination of two or more antenna port groups 350.

An antenna port group 350 or combination of two or more antenna port groups 350 is non-calibrated if the UE 140 is not capable of performing relative phase and/or amplitude calibration between the antenna ports 300 of the antenna port group 350 or the combination of two or more antenna port groups 350.

In some, but not necessarily all, examples, performing relative phase and/or amplitude calibration between antenna ports 300 and/or antenna port groups 350 compensates for user equipment-dependent transfer functions in phase and/or time domain associated with the different antenna ports 300 and/or different antenna port groups 350.

The UE 140 is therefore capable of performing relative phase and/or amplitude calibration between antenna ports 300 and/or antenna port groups 350 if it is possible to compensate for user equipment-dependent transfer functions in phase and/or time domain associated with the different antenna ports 300 and/or different antenna port groups 350.

In some, but not necessarily all, examples, relative phase calibration comprises delivering multiple timing offsets to multiple antenna ports 300 and/or antenna port groups 350 such that a phase difference between the multiple antenna ports 300 and/or antenna port groups 350 is below a threshold. In examples, the multiple timing offsets are different timing offsets.

The UE 140 is therefore capable of performing relative phase calibration between multiple antenna ports 300 and/or antenna port groups 350 if it is possible to deliver multiple timing offsets to the multiple antenna ports 300 and/or antenna port groups 350 such that a phase difference between the multiple antenna ports 300 and/or antenna port groups 350 is below a threshold.

In some, but not necessarily all, examples, relative amplitude calibration comprises delivering multiple power offsets to multiple antenna ports 300 and/or antenna port groups 350 such that an amplitude difference between the multiple antenna ports 300 and/or antenna port groups 350 is below a threshold. In examples, the multiple power offsets are different power offsets.

The UE 140 is therefore capable of performing relative amplitude calibration between multiple antenna ports 300 and/or antenna port groups 350 if it is possible to deliver multiple power offsets to the multiple antenna ports 300 and/or antenna port groups 350 such that a amplitude difference between the multiple antenna ports 300 and/or antenna port groups 350 is below a threshold.

In some, but not necessarily all, examples, the antenna port group calibration capability indicates, for multiple antenna port groups 350, multiple capabilities of the UE 140 to perform relative phase and/or amplitude calibration between antenna ports 300 of the multiple antenna port groups 350.

In some but not necessarily all examples, the antenna port group calibration capability indicates, for each antenna port group 350, a capability of the UE 140 to perform relative phase and/or amplitude calibration between multiple antenna ports 300 of the antenna port group 350.

For example, the antenna port group calibration capability may indicate, for a first antenna port group 350 comprising multiple antenna ports 300, a first capability of the UE 140 to perform relative phase and/or amplitude calibration between antenna ports 300 of the first antenna port group 350, and indicate, for a second antenna port group 350 comprising multiple antenna ports 300, a second capability of the UE 140 to perform relative phase and/or amplitude calibration between antenna ports 300 of the second antenna port group 350.

In some but not necessarily all examples, the first antenna port group 350 is different to the second antenna port group 350. For example, the first antenna port group 350 may comprise different antenna ports 300 to the second antenna port group 350 such that there is no overlap between antenna ports 300 of the first antenna port group 350 and antenna ports 300 of the second antenna port group 350.

In some but not necessarily all examples, the first capability is different to the second capability. For example, the first capability and/or the second capability may be a capability to perform: relative phase calibration but not relative amplitude calibration; relative amplitude calibration but not relative phase calibration; relative phase calibration and relative amplitude calibration; or neither relative phase calibration nor relative amplitude calibration. For example, the first capability and/or the second capability may be full-calibration, partial-calibration, or non-calibration.

In some, but not necessarily all, examples, the antenna port group calibration capability comprises an intra-group calibration indicator. In some, but not necessarily all, examples, an intra-group calibration indicator indicates at least one of a phase calibration state or an amplitude calibration state between multiple antenna ports within an antenna port group. In some, but not necessarily all, examples, an intra-group calibration indicator indicates a capability of the UE 140 to perform relative phase and/or amplitude calibration between multiple antenna ports 300 within an antenna port group 350.

For an antenna port group 350_N, an intra-group calibration indicator may be expressed as CNN.

In some examples, the intra-group calibration indicator indicates that an antenna port group 350 is one of: fully-calibrated, partially-calibrated, or non-calibrated.

An intra-group calibration indicator of fully-calibrated indicates that the UE 140 is capable of performing relative phase and/or amplitude calibration between the antenna ports 300 of the antenna port group 350.

An intra-group calibration indicator of partially-calibrated indicates that the UE 140 is capable of performing relative phase and/or amplitude calibration between a subset of the antenna ports 300 of the antenna port group 350. In examples, the subset of antenna ports 300 of the antenna port group 350 is less than all of the antenna ports 300 of the antenna port group 350.

An intra-group calibration indicator of non-calibrated indicates that the UE 140 is not capable of performing relative phase and/or amplitude calibration between the antenna ports 300 of the antenna port group 350.

In some, but not necessarily all, examples, the antenna port group calibration capability comprises an inter-group calibration indicator. In some, but not necessarily all, examples, an inter-group calibration indicator indicates at least one of a phase calibration state and/or an amplitude calibration state between two or more antenna port groups. In some, but not necessarily all, examples, an inter-group calibration indicator indicates a capability of the UE 140 to perform relative phase and/or amplitude calibration between two or more antenna port groups 350.

For antenna port groups 350_N and 350_M, an inter-group calibration indicator may be expressed as CNM and/or CMN.

In some such examples, the inter-group calibration indicator indicates that a combination of two or more antenna port groups 350 is one or more of: fully-calibrated, partially-calibrated, or non-calibrated.

An inter-group calibration indicator of fully calibrated indicates that the UE 140 is capable of performing relative phase and/or amplitude calibration between the antenna port groups 350 of the combination of two or more antenna port groups 350.

An inter-group calibration indicator of partially calibrated indicates that the UE 140 is capable of performing relative phase and/or amplitude calibration between a subset of the antenna ports 300 of the combination of two or more antenna port groups 350. In examples, the subset of antenna ports 300 of the combination of two or more antenna port groups 350 is less than all of the antenna ports 300 of the combination of two or more antenna port groups 350.

An inter-group calibration indicator of non-calibrated indicates that the UE 140 is not capable of performing relative phase and/or amplitude calibration between the antenna port groups 350.

In some, but not necessarily all, examples, the antenna port group calibration capability comprises an inter-group calibration indicator for all combinations, but not all permutations, of antenna port groups 350.

In some, but not necessarily all, examples, an inter-group calibration indicator between two antenna port groups 350_N and 350_M is dependent on the intra-group calibration indicator of at least one of antenna port group 350_N and antenna port group 350_M. In some such examples, the inter-group calibration indicator is equivalent to the lower of the intra-group calibration indicator of antenna port group 350_N and the intra-group calibration indicator of antenna port group 350_M. For example:
If CNN is "fully-calibrated" and CMM is "fully-calibrated", CNM is "fully-calibrated";
If CNN is "fully-calibrated" and CMM is "partially-calibrated", CNM is "partially-calibrated";
If CNN is "fully-calibrated" and CMM is "non-calibrated", CNM is "non-calibrated".

In examples, an antenna port group 350 has one intra-group calibration indicator and as many inter-group calibration indicators as there are possible combinations with other antenna port groups 350. For example, in a UE 140 comprising three antenna port groups 350, one antenna port group 350 may have one intra-group calibration indicator and two inter-group calibration indicators.

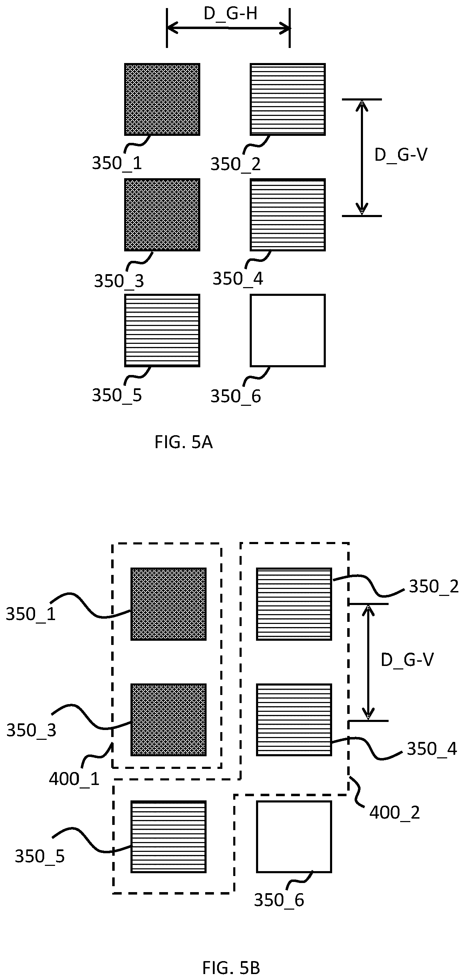

FIGs 5A and 5B illustrate an example of a UE 140 comprising six antenna port groups 350. Each antenna port group 350 comprises one or more antenna ports 300.

In the example of FIG. 5A, boxes with dotted fill represent antenna port groups 350 with an intra-group calibration indicator of fully-calibrated; boxes with striped fill represent antenna port groups 350 with an intra-group calibration indicator of partially-calibrated; boxes with no fill represent antenna port groups 350 with an intra-group calibration indicator of non-calibrated.

Therefore, in the example of FIG. 5A, the intra-group calibration indicators are as follows:
C11 = fully-calibrated;
C22 = partially-calibrated;
C33 = fully-calibrated;
C44 = partially-calibrated;
C55 = partially-calibrated; and
C66 = non-calibrated.

The inter-group calibration indicators for the example of FIG. 5A are set out in table 1, in which F indicates fully-calibrated; P indicates partially-calibrated; and N indicates non-calibrated.

**TABLE 1**

| | 1 | 2 | 3 | 4 | 5 | 6 |
|---|---|---|---|---|---|---|
| 1 | F | P | F | P | P | N |
| 2 | P | P | P | P | P | N |
| 3 | F | P | F | P | P | N |
| 4 | P | P | P | P | P | N |
| 5 | P | P | P | P | P | N |
| 6 | N | N | N | N | N | N |

In some, but not necessarily all, examples, the antenna port group calibration capability indicates a capability of the UE 140 to support non-codebook precoding for a plurality of antenna ports 300. The UE 140 is able to support non-codebook precoding for fully-calibrated and partially-calibrated antenna port groups 350 and/or combinations of antenna port groups 350, and is not able to support non-codebook precoding for non-calibrated antenna port groups 350 and/or combinations of antenna port groups 350.

The antenna port group calibration capability indicates that the UE 140 is capable of simultaneously transmitting single antenna port UL SRS resources via UE 140 logical antenna ports 300 associated with a plurality of fully calibrated and/or partially calibrated antenna port groups 350.

Referring back to FIG. 3, at block 304, the method comprises transmitting, to the network, an antenna port capability indicator comprising an indication of a size and/or an arrangement of the antenna ports 300 of the UE 140.

In the example of FIG. 3, method blocks 302 and 304 are carried out simultaneously.

The antenna port capability indicator comprises at least one of: a number of antenna port groups 350; a number of logical antenna ports per antenna port group 350; a number of physical antenna element per antenna port group 350; a number of physical antenna element per horizontal dimension; a number of physical antenna element per vertical dimension; one or more polarization domains of the antenna ports; a horizontal distance between antenna port groups 350; or a vertical distance between antenna port groups 350. wherein the antenna element comprises at least one of: antenna element, antenna connector and/or radiator.

At block 308, the method comprises receiving configuration information from a network node 150 of the network, wherein the configuration information comprises one or more uplink resource sets, wherein each uplink resource set is associated with an antenna group calibration information, and/or an indication of the antenna group calibration information.

In some, but not necessarily all, examples the configuration information comprises one or more antenna port supergroups 400, and an indication to use an antenna port supergroup 400 as a single uplink resource. The supergroup may be indicated explicitly or implicitly. The multiple antenna ports or the multiple antenna port groups shared the same single uplink resource can be regarded as a supergroup implicitly.

An antenna port supergroup 400 comprises one or more antenna port groups 350, wherein an inter-group calibration indicator of the antenna port groups 350 within the antenna port supergroup 400 is fully-calibrated or partially-calibrated. The UE 140 is thus able to perform relative phase and/or amplitude calibration between antenna ports 300 of the antenna port supergroup 400, or between a subset of antenna ports 300 of the antenna port supergroup 400.

In some, but not necessarily all, examples, it is assumed that antenna port groups 350 having an intra-group calibration indicator of non-calibrated cannot be used for non-codebook based transmission. Thus, no uplink resource set or antenna port supergroup 400 is created comprising an antenna port group 350 having an intra-group calibration indicator of non-calibrated.

FIG. 5B illustrates an example set of antenna port supergroups 400 comprising the antenna port groups 350 of FIG. 5A. In the example of FIG. 5B, all of the antenna port groups 350 sharing a configuration indicator (fully calibrated, partly calibrated) are provided as a single antenna port supergroup 400. In other examples, some but not all antenna port groups 350 sharing a configuration indicator are provided as an antenna port supergroup 400, for example, two or more antenna port supergroups 400 having the same configuration indicator may be provided. In such examples, the two or more antenna port supergroups 400 are distinct antenna port supergroups 400, that is, one antenna port group 350 may only be in one antenna port supergroup 400.

Referring back to FIG. 3, at block 310, the method comprises determining precoding for uplink transmission between the UE 140 and the network based on the received configuration information.

In some, but not necessarily all, examples, for a fully-calibrated antenna group or combination of antenna groups, the means for determining precoding are configured to determine the precoding based on one or more downlink measurements of a non-zero power channel state information resource associated with the one or more antenna ports, such that at least one of phase and amplitude are fully calibrated between multiple transmit physical antenna elements of the UE.

In some, but not necessarily all, examples, for a partially-calibrated antenna group or combination of antenna groups, the means for determining precoding are configured to determine the precoding based on one or more downlink measurement of a non-zero power channel state information resource associated with the one or more antenna ports, such that at least one of phase and amplitude are partially calibrated between multiple transmit physical antenna elements of the UE.

In some, but not necessarily all, examples, determining precoding for uplink transmission between the UE 140 and the network based on the received configuration information comprises determining, for an uplink resource set and/or an antenna port supergroup 400, precoding for uplink transmission between the UE 140 and the network using the uplink resource set or the antenna port supergroup 400.

In some examples, the UE 140 determines precoding, for multiple resource sets and/or multiple antenna port supergroups 400, precoding for uplink transmission between the UE 140 and the network using the multiple resource sets and/or the multiple antenna port supergroups 400. In some examples, the UE 140 determines precoding, for each resource set and/or antenna port supergroup 400, precoding for uplink transmission between the UE 140 and the network using each resource set and/or antenna port supergroup 400.

At block 312, the method comprises precoding at least one reference signal, to be transmitted using a resource set, using the determined precoding for the resource set.

In some, but not necessarily all, examples, the method comprises precoding at least one reference signal, to be transmitted using an antenna port supergroup 400, using the determined precoding for the antenna port supergroup 400.

In some, but not necessarily all, examples, the UE comprises means for determining precoding for the uplink resource set based on one or more downlink measurements of a non-zero power (NZP) channel state information (CSI) resource associated with the resource set.

In some, but not necessarily all, examples, when the uplink resource set is configured for usage in non-codebook transmission, and the antenna groups of the resource set are fully-calibrated, the UE comprises means for determining precoding for the transmission single antenna port UL SRS resources based on one or more DL measurements of a non-zero power (NZP) channel state information (CSI) resource associated with the one or more antenna parts based, at least in part, on the indication of the antenna port group calibration information comprising fully-calibrated. The precoding is determined such that phase and/or amplitude are fully-calibrated between different UE TX physical antenna elements of the resource set.

In some, but not necessarily all, examples, when the uplink SRS resource set is configured with usage 'non codebook' and Calibration Info = 'fully Calibrated', the UE determines precoder for the transmission single antenna port UL SRS resources based on DL measurements of an associated on-zero power (NZP)-Channel State Information (CSI) resource. The same applies also for non-codebook based PUSCH/PUCCH transmission.

In some, but not necessarily all, examples, when the uplink resource set is configured for usage in non-codebook transmission, and the antenna groups of the resource set are partially-calibrated, the UE comprises means for determining precoding for the transmission single antenna port UL SRS resources based on one or more DL measurement of a non-zero power (NZP) channel state information (CSI) resource associated with the one or more antenna ports based, at least in part, on the indication of the antenna port group calibration information comprising partially-calibrated. The precoding is determined such that phase and/or amplitude are partially-calibrated between different UE TX physical antenna elements of the resource set.

In some, but not necessarily all, examples, when the UL SRS resource set is configured with usage 'non codebook' and Calibration Info = 'partially Calibrated', the UE determines precoder for the transmission single antenna port UL SRS resources based on DL measurements of an associated NZP CSI resource. The same applies also for non-codebook based PUSCH/PUCCH transmission.

In some examples, the UE 140 precodes multiple reference signals, to be transmitted using multiple resource sets and/or multiple antenna port supergroups 400. In some examples, the UE 140 precodes multiple reference signals, to be transmitted using each resource set and/or each antenna port supergroup 400.

At block 314, the method comprises transmitting the at least one precoded reference signal by the resource set and/or the antenna port supergroup 400 associated with the precoding.

At block 320, the method comprises receiving, from the network, an antenna port supergroup 400 indication for indicating which antenna port supergroup 400 of the one or more antenna port supergroups 400 is to be used for UL transmission between the UE 140 and the network.

At block 322, the method comprises enabling UL transmission between the UE 140 and the NW using the indicated antenna port supergroup 400.

In some, but not necessarily all, examples, the uplink transmission is single antenna port UL SRS transmission/non-codebook based PUSCH/PUCCH transmission.

Consequently, FIG. 3 illustrates a method comprising:
transmitting, to a network, an antenna port group calibration capability associated with non-codebook based precoding for uplink communications between the UE 140 and the network,
wherein the antenna port group calibration capability indicates a capability of the UE 140 to perform relative phase and/or amplitude calibration between multiple antenna ports 300 of the UE 140;
transmitting, to the network, an antenna port capability indicator comprising an indication of a size and/or an arrangement of the antenna ports 300 of the UE 140;
receiving configuration information from a network node 150 of the network, wherein the configuration information comprises one or more uplink resource sets, wherein an uplink resource set comprises one or more antenna port groups 350, and wherein an inter-group calibration indicator of the antenna port groups 350 within the uplink resource set is fully-calibrated or partially-calibrated, and an indication to use an uplink resource set as a single uplink resource;
determining precoding for uplink transmission between the UE 140 and the network based on the received configuration information;
precoding at least one reference signal, to be transmitted using an uplink resource set, using the determined precoding for the uplink resource set;
transmitting, to the network, the at least one precoded reference signal by the uplink resource set associated with the precoding;
receiving, from the network, an uplink resource set indication for indicating which uplink resource set of the one or more antenna port uplink resource sets is to be used for uplink transmission between the UE 140 and the network; and
enabling uplink transmission between the UE 140 and the network using the indicated uplink resource set.

From the point of view of the network node 150, at block 302, the method comprises receiving, from a UE 140, an antenna port group calibration capability associated with non-codebook based precoding for uplink communications between the UE 140 and the network.

At block 304, the method comprises receiving, from the UE 140, an antenna port capability indicator comprising an indication of a size and/or an arrangement of the antenna ports 300 of the UE 140.

In the example of FIG. 3, method blocks 302 and 304 are carried out simultaneously. In other examples, method blocks 302 and 304 may carried out separately.

At block 306, the method comprises determining, based at least one the received antenna port group calibration capability, one or more uplink resource sets, wherein an uplink resource set comprises one or more antenna port groups.

In some, but not necessarily all, examples, the method comprises determining one or more antenna port supergroups 400, wherein an antenna port supergroup 400 comprises one or more antenna port groups 350, and wherein an inter-group calibration indicator of the antenna port groups 350 within the antenna port supergroup 400 is fully-calibrated or partially-calibrated.

In some, but not necessarily all, examples, the network determines how many antenna port groups 350 are captured within an uplink resource set and/or antenna port supergroup 400. In some examples, said determination is based, at least in part, on the received antenna port capability indicator.

At block 308, the method comprises transmitting configuration information to the UE 140, wherein the configuration information comprises one or more uplink resource sets, wherein each uplink resource set is associated with an antenna group calibration information, and/or an indication of the antenna group calibration information.

In some, but not necessarily all, examples, the configuration information comprises the one or more antenna port supergroups 400, and an indication to use an antenna port supergroup 400 as a single uplink resource.

At block 314, the method comprises receiving, from the UE 140, the at least one precoded reference signal.

At block 316, the method comprises determining a channel estimate based on the received precoded reference signal.

At block 318, the method comprises determining, based on the channel estimate, which uplink resource set and/or antenna port supergroup 400 of the one or more uplink resource sets and/or antenna port supergroups 400 is to be used for uplink transmission between the UE 140 and the network.

At block 320, the method comprises transmitting, to the UE 140, an uplink resource set and/or an antenna port supergroup 400 indication for indicating which uplink resource set and/or antenna port supergroup 400 of the one or more uplink resource set and/or antenna port supergroups 400 is to be used for UL transmission between the UE 140 and the network.

At block 322, the method comprises enabling UL transmission between the UE 140 and the NW using the indicated uplink resource set and/or antenna port supergroup 400.

Consequently, FIG. 3 illustrates a method comprising:
receiving, from a UE 140, an antenna port group calibration capability associated with non-codebook based precoding for uplink communications between the UE 140 and the network;
receiving, from the UE 140, an antenna port capability indicator comprising an indication of a size and/or an arrangement of the antenna ports 300 of the UE 140;
The receiving of antenna port group calibration capability and an antenna port capability may be in the same message or separate message.
determining, based at least one the received antenna port group calibration capability, one or more uplink resource sets, wherein an uplink resource set comprises one or more antenna port groups 350, and wherein an inter-group calibration indicator of the antenna port groups 350 within the uplink resource set is fully-calibrated or partially-calibrated;
transmitting configuration information to the UE 140, wherein the configuration information comprises the one or more uplink resource sets, and an indication to use an uplink resource set as a single uplink resource;
receiving, from the UE 140, the at least one precoded reference signal;
determining a channel estimate based on the received precoded reference signal; determining, based on the channel estimate, which uplink resource set of the one or more uplink resource sets is to be used for uplink transmission between the UE 140 and the network;
transmitting, to the UE 140, an uplink resource set indication for indicating which uplink resource set of the one or more uplink resource sets is to be used for UL transmission between the UE 140 and the network; and
enabling UL transmission between the UE 140 and the NW using the indicated uplink resource set.

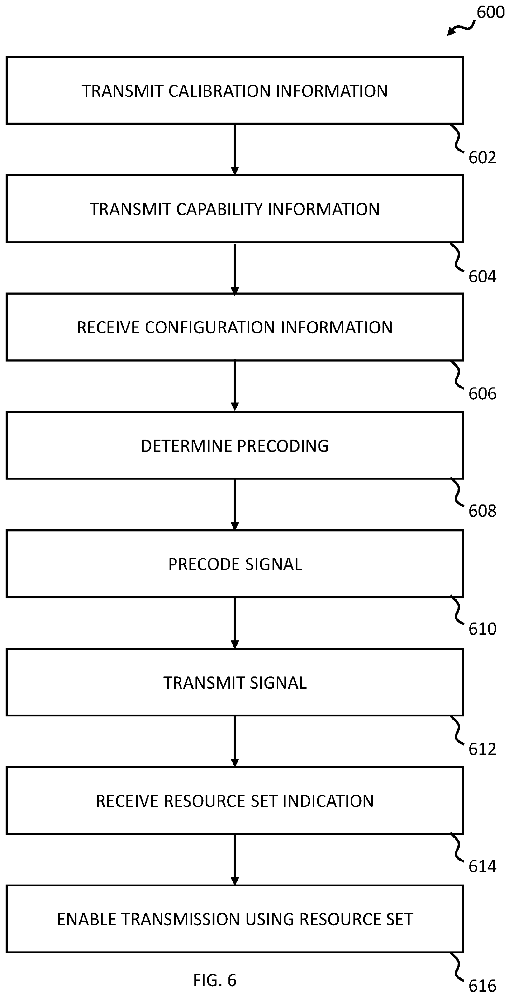

FIG. 6 illustrates an example of a method 600.

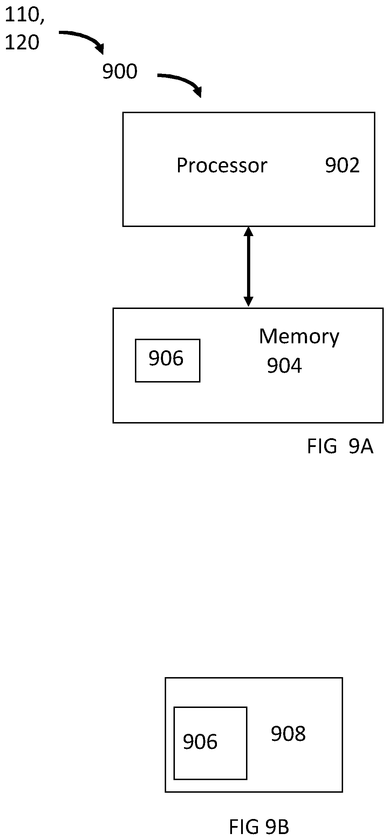

The method can be performed by any suitable apparatus comprising any suitable means for performing the method, for example an apparatus as described in relation to FIG. 9A.

In examples, the method can be performed by a terminal node 110, such as a UE 140.

At block 602, method 600 comprises transmitting, to a network, an antenna port group calibration capability associated with non-codebook based precoding for uplink communications between the UE 140 and the network, wherein the antenna port group calibration capability indicates a capability of the UE 140 to perform relative phase and/or amplitude calibration between multiple antenna ports 300 of the UE 140.

At block 604, method 600 comprises transmitting, to the network, an antenna port capability indicator comprising an indication of a size and/or an arrangement of the antenna ports 300 of the UE 140.

In one example, blocks 602 and 604 are carried out simultaneously e.g. in one message. In other examples, blocks 602 and 604 may carried out separately e.g. in the same or different messages.

At block 606, method 600 comprises receiving configuration information from a network node 150 of the network, wherein the configuration information comprises one or more uplink resource sets, wherein an uplink resource set comprises one or more antenna port groups 350, and wherein an inter-group calibration indicator of the antenna port groups 350 within the uplink resource set is fully-calibrated or partially-calibrated, and an indication to use an uplink resource set as a single uplink resource.

At block 608, method 600 comprises determining precoding for uplink transmission between the UE 140 and the network based on the received configuration information.

At block 610, method 600 comprises precoding at least one reference signal, to be transmitted using an uplink resource set, using the determined precoding for the uplink resource set.

At block 612, method 600 comprises transmitting, to the network, the at least one precoded reference signal by the uplink resource set associated with the precoding.

At block 614, method 600 comprises receiving, from the network, a supergroup indication for indicating which uplink resource set of the one or more uplink resource sets is to be used for uplink transmission between the UE 140 and the network.

At block 616, method 600 comprises enabling uplink transmission between the UE 140 and the network using the indicated uplink resource set.

Consequently, FIG. 6 illustrates a method comprising:
transmitting, to a network, an antenna port group calibration capability associated with non-codebook based precoding for uplink communications between the UE 140 and the network,
wherein the antenna port group calibration capability indicates a capability of the UE 140 to perform relative phase and/or amplitude calibration between multiple antenna ports 300 of the UE 140;
transmitting, to the network, an antenna port capability indicator comprising an indication of a size and/or an arrangement of the antenna ports 300 of the UE 140;
receiving configuration information from a network node 150 of the network, wherein the configuration information comprises one or more uplink resource sets, wherein an uplink resource set comprises one or more antenna port groups 350, and wherein an inter-group calibration indicator of the antenna port groups 350 within the uplink resource set is fully-calibrated or partially-calibrated, and an indication to use an uplink resource set as a single uplink resource;
determining precoding for uplink transmission between the UE 140 and the network based on the received configuration information;
precoding at least one reference signal, to be transmitted using an uplink resource set, using the determined precoding for the uplink resource set;
transmitting, to the network, the at least one precoded reference signal by the uplink resource set associated with the precoding;
receiving, from the network, an uplink resource set indication for indicating which uplink resource set of the one or more uplink resource sets is to be used for uplink transmission between the UE 140 and the network; and
enabling uplink transmission between the UE 140 and the network using the indicated uplink resource set.

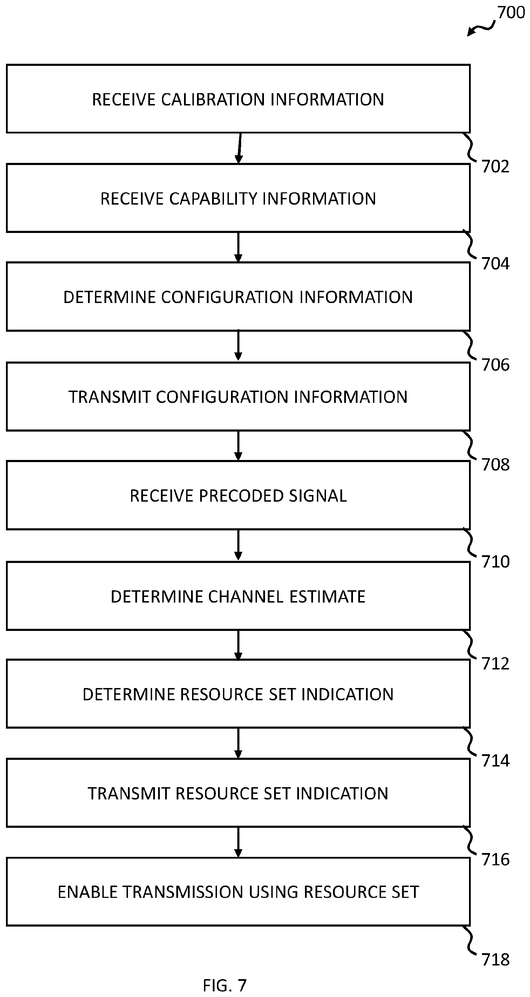

FIG. 7 illustrates an example of a method.

The method can be performed by any suitable apparatus comprising any suitable means for performing the method, for example an apparatus as described in relation to FIG. 9A.

In examples, the method can be performed by an network node 150, such as a gNB.

At block 702, method 700 comprises receiving, from a UE 140, an antenna port group calibration capability associated with non-codebook based precoding for uplink communications between the UE 140 and the network.

At block 704, method 700 comprises receiving, from the UE 140, an antenna port capability indicator comprising an indication of a size and/or an arrangement of the antenna ports 300 of the UE 140.

In one example, blocks 702 and 704 are carried out simultaneously e.g. in one message. In other examples, blocks 702 and 704 may carried out separately e.g. in the same or different messages.

At block 706, method 700 comprises determining, based at least one the received antenna port group calibration capability, one or more uplink resource sets, wherein an uplink resource set comprises one or more antenna port groups 350, and wherein an inter-group calibration indicator of the antenna port groups 350 within the uplink resource set is fully-calibrated or partially-calibrated.

At block 708, method 700 comprises transmitting configuration information to the UE 140, wherein the configuration information comprises the one or more uplink resource sets, and an indication to use an uplink resource set as a single uplink resource.

At block 110, 150, method 700 comprises receiving, from the UE 140, the at least one precoded reference signal.

At block 712, method 700 comprises determining a channel estimate based on the received precoded reference signal.

At block 714, method 700 comprises determining, based on the channel estimate, which uplink resource set of the one or more uplink resource sets is to be used for uplink transmission between the UE 140 and the network.

At block 716, method 700 comprises transmitting, to the UE 140, an uplink resource set indication for indicating which uplink resource set of the one or more uplink resource sets is to be used for UL transmission between the UE 140 and the network.

At block 718, method 700 comprises enabling UL transmission between the UE 140 and the NW using the indicated uplink resource set.

Consequently, FIG. 7 illustrates a method comprising:
receiving, from a UE 140, an antenna port group calibration capability associated with non-codebook based precoding for uplink communications between the UE 140 and the network;
receiving, from the UE 140, an antenna port capability indicator comprising an indication of a size and/or an arrangement of the antenna ports 300 of the UE 140;
determining, based at least one the received antenna port group calibration capability, one or more uplink resource sets, wherein an uplink resource set comprises one or more antenna port groups 350, and wherein an inter-group calibration indicator of the antenna port groups 350 within the uplink resource set is fully-calibrated or partially-calibrated; transmitting configuration information to the UE 140, wherein the configuration information comprises the one or more uplink resource sets, and an indication to use an uplink resource set as a single uplink resource;
receiving, from the UE 140, the at least one precoded reference signal;
determining a channel estimate based on the received precoded reference signal; determining, based on the channel estimate, which uplink resource set of the one or more uplink resource sets is to be used for uplink transmission between the UE 140 and the network;
transmitting, to the UE 140, an uplink resource set indication for indicating which uplink resource set of the one or more uplink resource sets is to be used for UL transmission between the UE 140 and the network; and
enabling UL transmission between the UE 140 and the NW using the indicated uplink resource set.

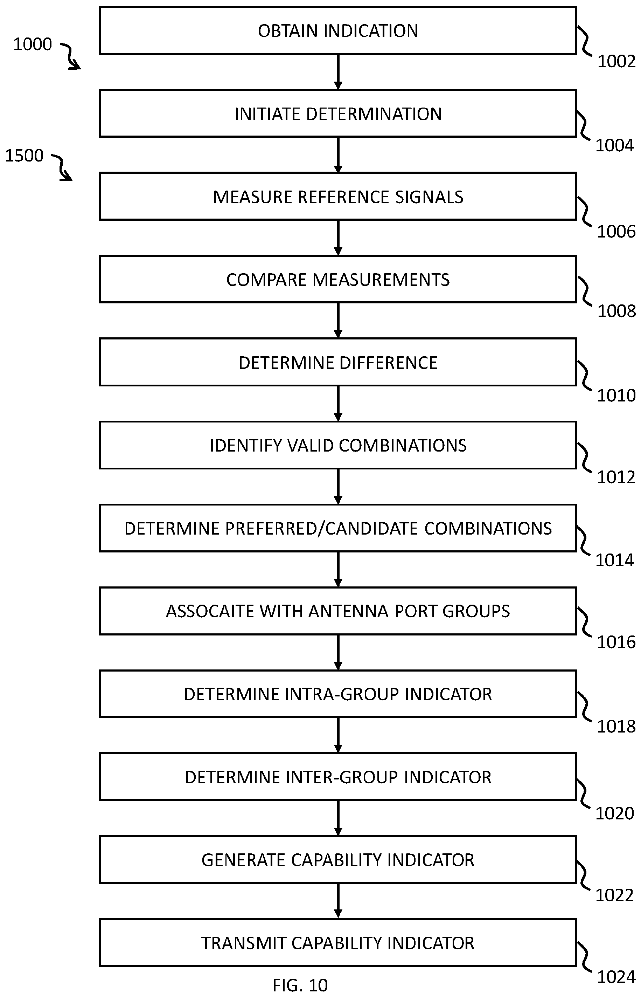

FIG. 10 illustrates an example of a method 1000.

In examples, FIG. 10 can be considered to illustrate a plurality of methods.

The method 1000 can be performed by any suitable apparatus comprising any suitable means for performing the method 1000, for example an apparatus as described in relation to FIG. 9A.

The method 1000 can be performed in combination with one or more of the methods described above. For example, the method 1000 may be performed before and/or concurrently with method 300 and/or method 600. Method 1000 and methods 300, 600 may be performed by the same apparatus or by different apparatuses.

In examples, the method 1000 can be performed by a terminal node 110, such as a UE 140.

The method 1000 is for determining an antenna port calibration capability of the UE. The method 1000 may be considered to comprise a main block 1050 comprising determining an antenna port group calibration capability of the UE. Blocks 1002 - 1024 may be sub-blocks of main block 1050.

The antenna port group calibration capability depends on at least one of: phase calibration; or amplitude calibration of one or more antenna port groups of the UE.

In some, but not necessarily all, examples, the antenna port group calibration capability is, or indicates, a capability of the UE to perform relative phase and/or amplitude calibration between multiple antenna ports of the UE.

In some, but not necessarily all, examples, determining the antenna port group calibration capability of the UE comprises determining a capability of the UE to perform relative phase and/or amplitude calibration between multiple antenna ports of the UE.

In some, but not necessarily all, examples, determining the antenna port group calibration capability comprises generating or otherwise creating an antenna port group calibration capability indicator associated with non-codebook-based precoding for uplink communications between the UE and a network. The antenna port group calibration capability indicator indicates a capability of the UE to perform relative phase and/or amplitude calibration between multiple antenna ports of the UE. In examples, the antenna port group calibration capability indicator is an antenna port group calibration capability as described above.

In some, but not necessarily all, examples, determination of the antenna port group calibration capability is carried out by the UE at the baseband level.

At block 1002, the method 1000 comprises obtaining an indication to initiate determination of the antenna port group calibration capability.

In some, but not necessarily all, examples, the indication is received from a network node. Determination of the antenna port group calibration capability is therefore initiated in dependence upon an instruction from the network.

In some, but not necessarily all, examples, the indication is generated by the UE based on a trigger condition being met. Determination of the antenna port group calibration capability is therefore initiated in dependence upon a trigger condition being met. Determination of the antenna port group calibration capability may therefore be carried out dynamically, for example during use of the UE.

In some, but not necessarily all, examples, a trigger condition is met if a change is detected by one or more sensors and/or if a change in a measured signal is detected. The one or more sensors may comprise at least one of: a proximity sensor; a motion sensor; or a position sensor. The change in a measured signal may be at least one of: a change in phase; a change in amplitude.

At block 1004, the method 1000 comprises initiating determination of the antenna port group calibration capability in dependence upon obtaining the indication.

At block 1006, the method 1000 comprises measuring one or more reference signals using one or more antenna ports.

In some, but not necessarily all examples, the one or more reference signals are measured by one or more combinations of two or more antenna ports.

In some, but not necessarily all, examples, the one or more reference signals are reception reference signals.

In some, but not necessarily all, examples, measuring the one or more reference signals comprises measuring symbols of the one or more reference signals.

In some, but not necessarily all, examples, measuring the one or more reference signals comprises measuring an amplitude and/or a phase of the one or more reference signals.

In some, but not necessarily all, examples, the method 1000 comprises measuring one or more downlink reference signals and/or one or more uplink reference signals and/or one or more uplink signals during granted uplink gaps. The downlink reference signals may be used to characterize/calibrate the RF receiver path. The transmit path can be characterized/calibrated by the UE transmitting an SRS or a specific TX reference signal for internal characterization. An uplink gap allocation from the network node is required for the UE to transmit an internal characterization/calibration signal.

At block 1008, the method 1000 comprises comparing a measurement of a first measured reference signal against a measurement of a second measured reference signal. The first reference signal is a downlink reference signal. The second reference signal is at least one of: a different measured reference signal; a reference signal measured at a different antenna port to the first measured reference signal; an uplink reference signal; or an expected reference signal.

The measurement of the first reference signal is therefore a measurement of a downlink reference signal. The measurement of the second reference signal is therefore at least one of: a measurement of a different measured reference signal; a measurement of a reference signal measured at a different antenna port to the first measured reference signal; a measurement of an uplink reference signal; or a measurement of an expected reference signal.

In some, but not necessarily all, examples, the first measured reference signal is a downlink reference signal measured at two or more antenna ports and the second measured reference signal is an uplink reference signal measured at one or more antenna ports.

At block 1010, the method 1000 comprises determining a difference between one or more dynamic characteristics of two or more antenna ports based, at least in part, on a comparison of a measurement of one or more downlink reference signals measured at the first antenna port and the second antenna port.

In some, but not necessarily all, examples, the method 1000 comprises determining a difference between one or more dynamic characteristics of a first antenna port of the two or more antenna ports and one or more corresponding dynamic characteristics of a second antenna port of the two or more antenna ports. Determination of the difference is based, at least in part, on a comparison of a measurement of one or more uplink reference signals measured at the first antenna port and a measurement of one or more uplink reference signals measured at the second antenna port.

In some, but not necessarily all, examples, the method 1000 comprises determining a difference between one or more dynamic characteristics of the first antenna port of the two or more antenna ports and one or more corresponding dynamic characteristics of a third antenna port of the two or more antenna ports. Determination of the difference is based, at least in part, on a comparison of a measurement of the downlink reference signal measured at the first antenna port and a measurement of a downlink reference signal measured at the third antenna port.

In some, but not necessarily all, examples, the method 1000 comprises determining a difference between one or more dynamic characteristics of a first combination of two or more antenna ports and one or more corresponding dynamic characteristics of a second combination of two or more antenna ports. Determination of the difference is based, at least in part, on a comparison of a measurement of a downlink reference signal measured at the first combination of one or more antenna ports and a measurement of a downlink reference signal measured at the second combination of one or more antenna ports.

In some, but not necessarily all, examples, the one or more dynamic characteristics comprise at least one of: directivity; complex impedance; angular direction of maximum gain; phase; amplitude.

In examples, a first downlink reference signal can be used to characterize the receiver path on all antenna ports. The UE reference signals may be sent simultaneously on all transmitting paths or sequentially.

In some, but not necessarily all, examples, the DL signals are used to measure the relative amplitude and phase difference between the antenna ports. Based on this, the UE can apply the correct amplitude and phase values (pre-coding) for the Non-Codebook-Based UL MIMO transmission, as it knows the calibration values for each MIMO/RF branch and the required relative amplitude and phase values between the antenna ports.

At block 1012, the method 1000 comprises identifying one or more valid combinations of two or more antenna ports.

The identification is based, at least in part, on the comparison of two or more reference signals. For example, the identification may be based, at least in part, on the comparison of the measurement of the first measured reference signal and the measurement of the second measured reference signal.

In some, but not necessarily all, examples, the identification of one or more valid combinations of two or more antenna ports is based, at least in part, on a comparison, for multiple antenna ports of the two or more antenna ports, of a measured downlink reference signal at the antenna port and a measured uplink reference signal at the antenna port. In some, but not necessarily all, examples, the identification of one or more valid combinations of two or more antenna ports is based, at least in part, on a comparison, for all antenna ports of the two or more antenna ports, of a measured downlink reference signal at the antenna port and a measured uplink reference signal at the antenna port.

In some, but not necessarily all, examples, the identification of one or more valid combinations of two or more antenna ports is based, at least in part, on a comparison of one or more first reference signals measured at a first antenna port of the two or more antenna ports and one or more second reference signals measured at a second antenna port of the two or more antenna ports.

In some, but not necessarily all, examples, a combination of two or more antenna ports is valid if it is possible to perform relative phase and/or amplitude calibration between at least a subset of the two or more antenna ports.

In some, but not necessarily all, examples, a combination of two or more antenna ports is valid and its calibration capability is fully-calibrated if the UE is capable of performing relative phase and/or amplitude calibration between the two or more antenna ports. In some examples, a combination of two or more antenna ports is valid and its calibration capability is fully-calibrated if the UE is capable of performing relative phase and/or amplitude calibration between all antenna ports.

In some, but not necessarily all, examples, a combination of two or more antenna ports is valid and its calibration capability is partially-calibrated if the UE is capable of performing relative phase and/or amplitude calibration between a subset of the two or more antenna ports. In some examples, a combination of two or more antenna ports is valid and its calibration capability is partially-calibrated if the UE is capable of performing relative phase and/or amplitude calibration between some, but not all, antenna ports.

In some, but not necessarily all, examples, a combination of two or more antenna ports is not valid and its calibration capability is non-calibrated if the UE is not capable of performing relative phase and/or amplitude calibration between the two or more antenna ports.

In some, but not necessarily all, examples, performing relative phase and/or amplitude calibration between antenna ports and/or antenna port groups compensates for user equipment-dependent transfer functions in phase and/or time domain associated with the different antenna ports and/or different antenna port groups.

In some, but not necessarily all, examples, relative phase calibration comprises delivering multiple timing offsets to multiple antenna ports and/or antenna port groups such that a phase difference between the multiple antenna ports and/or antenna port groups is below a threshold.

In some, but not necessarily all, examples, relative amplitude calibration comprises delivering multiple power offsets to the multiple antenna ports and/or antenna port groups such that an amplitude difference between the multiple antenna ports and/or antenna port groups is below a threshold.

In some, but not necessarily all, examples, a combination of two or more antenna ports is valid if phase and amplitude are reciprocal between the RX path and the TX path for the two or more antenna ports.

In some, but not necessarily all, examples, a validity of a combination of two or more antenna ports is based, at least in part, on at least one of: a coherency of the channel; movement and/or rotation of the UE; a time since the combination of two or more antenna ports was last calibrated; an RF front end reconfiguration.

At block 1014, the method 1000 comprises determining at least one of: one or more preferred combinations of one or more antenna ports; or one or more candidate combinations of one or more antenna ports. The determination is based at least in part on the identified one or more valid combinations of two or more antenna ports.

In some, but not necessarily all, examples, a preferred combination of one or more antenna ports is a combination of antenna ports with a best expected performance of the one or more combinations of one or more antenna ports. For example, a preferred combination of one or more antenna ports may have one or more of: a highest number of fully-calibrated antenna ports; a highest RSRP.

In some, but not necessarily all, examples, a candidate combination of one or more antenna ports is a combination of one or more antenna ports which may be used as an alternative to a serving combination of one or more antenna ports. For example, if a performance of a serving combination of one or more antenna ports drops below a threshold, the candidate combination of one or more antenna ports may become a new serving combination of one or more antenna ports. The new serving combination of one or more antenna ports may replace the previous serving combination of one or more antenna ports, or may serve in addition to the previous serving combination of one or more antenna ports.

In some, but not necessarily all, examples, antenna ports of a candidate combination of one or more antenna ports are calibrated before the candidate combination of one or more antenna ports becomes a serving combination of one or more antenna ports. In other examples, antenna ports of a candidate combination of one or more antenna ports are calibrated after the candidate combination of one or more antenna ports is selected to be used as a serving combination of one or more antenna ports.

In some, but not necessarily all, examples, determining one or more preferred combinations and/or one or more candidate combinations of one or more antenna ports is based on a calibration capability of the one or more combinations of one or more antenna ports.

In some, but not necessarily all, examples, one or more valid and fully-calibrated combinations of one or more antenna ports are selected as preferred combinations and/or candidate combinations in preference to one or more valid and partially-calibrated combinations of one or more antenna ports.

In some, but not necessarily all, examples, one or more valid and partially-calibrated combinations of one or more antenna ports are selected as preferred combinations and/or candidate combinations in preference to one or more not valid and non-calibrated combinations of antenna ports.

In some, but not necessarily all, examples, determining one or more preferred combinations and/or one or more candidate combinations of antenna ports comprises measuring an RSRP of the one or more valid combinations of one or more antenna ports.

In some such examples, determination of the one or more preferred combinations and/or one or more candidate combinations is based, at least in part, on the measured RSRP. In some, but not necessarily all, examples, the one or more preferred combinations and/or one or more candidate combinations is selected in dependence upon one or more highest measured RSRPs.

At block 1016, the method 1000 comprises associating the one or more preferred combinations and/or the one or more candidate combinations of antenna ports with one or more antenna port groups. An antenna port group comprises at least the antenna ports of its associated one or more combinations of antenna ports.

At block 1018, the method 1000 comprises determining an intra-group calibration indicator for one or more of the antenna port groups.

An intra-group calibration indicator indicates a capability of the UE to perform relative phase and/or amplitude calibration between multiple antenna ports within an antenna port group. In examples, the determined intra-group calibration indicator is an intra-group calibration indicator as described above.

The intra-group calibration indicator is determined in dependence upon a calibration capability of the one or more combinations of antenna ports associated with the antenna port group. In some, but not necessarily all, examples, the intra-group calibration indicator identifies an antenna port group as being fully-calibrated, partially-calibrated, or non-calibrated in dependence upon a calibration capability of the associated one or more combinations of antenna ports.

At block 1020, the method 1000 comprises determining an inter-group calibration indicator for a combination of two or more antenna port groups.

An inter-group calibration indicator indicates a capability of the UE to perform relative phase and/or amplitude calibration between two or more antenna port groups. In examples, the determined inter-group calibration indicator is an inter-group calibration indicator as described above.

The inter-group calibration indicator is determined in dependence upon a calibration capability of the one or more combinations of antenna ports associated with the two or more antenna port groups. In some, but not necessarily all, examples, the inter-group calibration indicator indicates a combination of antenna port groups as being fully-calibrated, partially-calibrated or non-calibrated in dependence upon a calibration capability of the associated one or more combinations of antenna ports.

At block 1022, the method 1000 comprises generating the antenna port group calibration capability indicator.

Generating the antenna port group calibration capability indicator comprises generating an indication of: one or more antenna port groups; an intra-group calibration indicator of the one or more antenna port groups; and an inter-group calibration indicator of one or more combinations of the one or more antenna port groups.

In some, but not necessarily all, examples, the antenna port group calibration capability indicator comprises an indication of multiple but not all, antenna port groups. In other examples, the antenna port group calibration capability indicator comprises an indication of all identified antenna port groups.

The antenna port group calibration capability indicator therefore provides phase and amplitude information for different antenna ports. The antenna port group calibration capability indicator thus enables identification of which antenna ports may be calibrated.

At block 1024, the method 1000 comprises transmitting the antenna port group calibration capability indicator to the network. In some examples, block 1024 is carried out as block 302 of method 300 and/or as block 602 of method 600.

Consequently, FIG. 10 illustrates a method 1000 of determining an antenna port group calibration capability of the UE, comprising:
obtaining an indication to initiate determination of the antenna port group calibration capability;
initiating determination of the antenna port group calibration capability;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid combinations of two or more antenna ports;
determining at least one of: one or more preferred combinations of one or more antenna ports, or one or more candidate combinations of one or more antenna ports;
associating the one or more preferred combinations and/or the one or more candidate combinations of antenna ports with one or more antenna port groups;
determining an intra-group calibration indicator for one or more of the antenna port groups; determining an inter-group calibration indicator for a combination of two or more antenna port groups;
generating an antenna port group calibration capability indicator; and transmitting the antenna port group calibration capability indicator to the network.

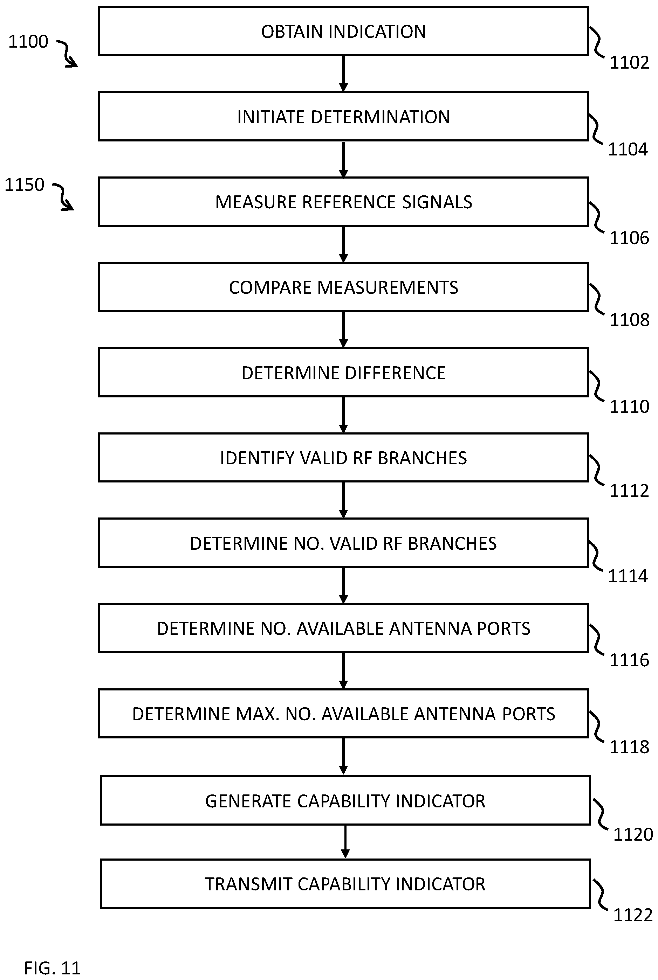

FIG. 11 illustrates an example of a method 1100.

In examples, FIG. 11 can be considered to illustrate a plurality of methods.

The method 1100 can be performed by any suitable apparatus comprising any suitable means for performing the method 1100, for example an apparatus as described in relation to FIG. 9A.

The method 800 can be performed in combination with one or more of the methods described above. For example, the method 800 may be performed before and/or concurrently with method 300 and/or method 600. Method 800 and methods 300, 600 may be performed by the same apparatus or by different apparatus.

In examples, the method 800 can be performed by a terminal node 110, such as a UE 140.

The method 800 is for determining a multi-antenna port calibration capability of the UE. The method 800 may be considered to comprise a main block 850 comprising determining a multi-antenna port calibration capability of the UE. Blocks 802 - 826 may be sub-blocks of main block 850.

The multi-antenna port calibration capability depends on at least one of: phase calibration; or amplitude calibration of one or more RF branches of the UE.

In some, but not necessarily all, examples, the multi-antenna port calibration capability is, or indicates, a capability of the UE to perform relative phase and/or amplitude calibration between multiple antenna ports of the UE.

In some, but not necessarily all, examples, determining the antenna port calibration capability of the UE comprises determining a capability of the UE to perform relative phase and/or amplitude calibration between multiple antenna ports of the UE.

In some, but not necessarily all, examples, the multi-antenna port calibration capability additionally or alternatively indicates a capability of the UE to perform phase and/or amplitude calibration of one or more RF branches of the UE.

In some, but not necessarily all, examples, determining the multi-antenna port calibration capability comprises generating or otherwise creating a multi-antenna port calibration capability indicator for facilitating non-codebook based precoding for uplink communications between the UE and the network. The multi-antenna port calibration capability indicator indicates a capability of the UE to perform relative phase and/or amplitude calibration between multiple antenna ports of the UE and/or a capability of the UE to perform phase and/or amplitude calibration of one or more RF branches of the UE.

In some, but not necessarily all, examples, determination of the multi-antenna port calibration capability is carried out by the UE at the baseband level.

At block 802, the method 800 comprises obtaining an indication to initiate determination of the multi-antenna port calibration capability.

In some, but not necessarily all, examples, the indication is received from a network node. Determination of the multi-antenna port calibration capability is therefore initiated in dependence upon an instruction from the network.

In some, but not necessarily all, examples, the indication is generated by the UE based on a trigger condition being met. Determination of the multi-antenna port calibration capability is therefore initiated in dependence upon a trigger condition being met. Determination of the multi-antenna port calibration capability may therefore be carried out dynamically, for example during u se of the UE.

In some, but not necessarily all, examples, a trigger condition is met if a change is detected by one or more sensors and/or if a change in a measured signal is detected. The one or more sensors may comprise at least one of: a proximity sensor; a motion sensor; or a position sensor. The change in a measured signal may be at least one of: a change in phase; a change in amplitude.

At block 804, the method 800 comprises initiating determination of the multi-antenna port calibration capability in dependence upon obtaining the indication.

At block 806, the method 800 comprises measuring one or more reference signals using one or more antenna ports.

The one or more antenna ports used to measure the one or more reference signals are connected to respective RF branches. An RF branch is connected to one of one or more selectable antenna ports. Thus, by measuring the reference signal at an antenna port connected to an RF branch, information about the RF branch may be obtained.

In some, but not necessarily all, examples, the one or more reference signals are one or more downlink reference signals. In some, but not necessarily all, examples, the one or more reference signals are one or more uplink reference signals. In some, but not necessarily all, examples, the one or more reference signals comprise one or more downlink reference signals and one or more uplink reference signals.

In some, but not necessarily all, examples, the reference signals comprise at least one or more of: a first set of one or more downlink reference signals; a second set of one or more downlink reference signals; and a first set of one or more uplink reference signals. The first set of downlink reference signals and the second set of downlink reference signals may comprise the same, overlapping, or different reference signals. In some, but not necessarily all, examples, the first set of one or more uplink reference signals comprise one or more RF calibration signals.

In examples, blocks 806 - 812 provide a sub-method of method 800 for identifying one or more valid RF branches. Some examples set out under blocks 806 - 812 are described with reference to a single RF branch for clarity; however, it should be appreciated that blocks 806 - 812 may be carried out for multiple RF branches, simultaneously or sequentially.

Thus, in examples, at block 806, the method 800 comprises measuring one or more reference signals using an antenna port connected to an RF branch.

In some, but not necessarily all, examples, the one or more reference signals are measured by one or more combinations of two or more antenna ports.

In some, but not necessarily all, examples, the one or more reference signals are reception reference signals.

In some, but not necessarily all, examples, measuring the one or more reference signals comprises measuring symbols of the one or more reference signals.

In some, but not necessarily all, examples, measuring the one or more reference signals comprises measuring an amplitude and/or a phase of the one or more reference signals.

In some, but not necessarily all, examples, the method 800 comprises measuring one or more downlink reference signals and/or one or more uplink reference signals and/or one or more granted uplink gaps. An uplink gap is an allocation where the UE is not required to transmit to the gNB. Such an uplink gap can be used by the UE to for example perform a TX calibration.

For example, the method 800 may comprise measuring a downlink reference signal and an uplink reference signal at the antenna port connected to the RF branch.

In examples, one or more downlink reference signals of the second set of downlink reference signals are used to characterize/calibrate the RF receiver path.

The transmit path can be characterized/calibrated by the UE transmitting an SRS or a specific TX reference signal for internal characterization. In some, but not necessarily all, examples, one or more uplink reference signals of the first set of uplink reference signals are used to characterise/calibrate the RF transmit path. An uplink gap allocation from the network node may be required for the UE to transmit an internal characterization/calibration signal.

At block 808, the method 800 comprises comparing a measurement of a first measured reference signal against a measurement of a second measured reference signal. The first reference signal is a downlink reference signal or an uplink reference signal. The second reference signal is at least one of: a different measured reference signal; a reference signal measured at a different antenna port to the first measured reference signal; an uplink reference signal; a downlink reference signal; or an expected reference signal.

The measurement of the first reference signal is therefore a measurement of a downlink reference signal. The measurement of the second reference signal is therefore at least one of: a measurement of a different measured reference signal; a measurement of a reference signal measured at a different antenna port to the first measured reference signal; a measurement of an uplink reference signal; a measurement of a downlink reference signal; or a measurement of an expected reference signal.

In examples, the first reference signal is a downlink reference signal measured at an antenna port connected to an RF branch and the second reference signal is an RF calibration signal measured at the antenna port connected to the RF branch.

In some, but not necessarily all, examples, the first reference signal is a downlink reference signal of the first set of downlink reference signals and the second reference signal is a downlink reference signal of the first set of downlink reference signals. In some, but not necessarily all, examples, the first reference signal is a downlink reference signal of the first set of downlink reference signals and the second reference signal is an uplink reference signal of the first set of uplink reference signals.

At block 810, the method 800 comprises determining a difference between the first reference signal and the second reference signal.

In some, but not necessarily all, examples, the method 800 comprises determining a difference between one or more downlink reference signals of the second set of downlink reference signals and one or more uplink reference signals of the first set of uplink reference signals.

By determining a difference between a first (downlink) reference signal measured at an antenna port connected to an RF branch and a second (uplink) reference signal measured at the antenna port connected to the RF branch, a difference between the first (downlink) reference signal and a second (uplink) reference signal at the RF branch is determined. The measurements of the first reference signal and the second reference signal are performed at baseband.

In some, but not necessarily all, examples, the method 800 comprises determining one or more dynamic characteristics of the antenna port connected to the RF branch.

In some, but not necessarily all, examples, the one or more dynamic characteristics comprise at least one of: directivity; complex impedance; angular direction of maximum gain; phase; amplitude.

In examples, a first downlink reference signal can be used to characterize the receiver path on an antenna port connected to an RF branch. In examples, a first downlink reference signal can be used to characterize the receiver path on all multiple antenna ports connected to multiple RF branches. The UE reference signals may be sent simultaneously on all transmitting paths or sequentially.

In some, but not necessarily all, examples, the reference signals are compared to determine the relative amplitude and phase difference between the antenna ports. In some such examples, the reference signals are downlink reference signals of the first set of downlink reference signals. Based on this, the UE can apply the correct amplitude and phase values (pre-coding) for the Non-Codebook-Based UL MIMO transmission, as it knows the calibration values for each MIMO/RF branch and the required relative amplitude and phase values between the antenna ports.

At block 812, the method 800 comprises identifying one or more valid RF branches covering a first frequency band.

The identification is based, at least in part, on the comparison of the two or more measured reference signals. For example, the identification may be based, at least in part, on the comparison of the measurement of the first (downlink) measured reference signal and the measurement of the second (uplink) measured reference signal.

In some, but not necessarily all, examples, the identification of a valid RF branch covering a first frequency band is based, at least in part, on a comparison, for an antenna port connected to the RF branch, of a measured downlink reference signal at the antenna port and a measured uplink reference signal at the antenna port. In some, but not necessarily all, examples, the identification of one or more valid RF branches covering a first frequency band is based, at least in part, on a comparison, for all antenna ports of the two or more antenna ports, of a measured downlink reference signal at the antenna port and a measured uplink reference signal at the antenna port.

In some, but not necessarily all, examples, identification of a valid RF branch is based, at least in part, on a comparison of two or more of the second set of downlink reference signals, a comparison of two or more of the first set of uplink reference signals, or a comparison of one or more of the second set of downlink reference signals and the first set of uplink reference signals.

In some, but not necessarily all, examples, an RF branch covering a first frequency band is valid if it is possible to perform relative phase and/or amplitude calibration between at least a subset of the two or more antenna ports.

In some, but not necessarily all, examples, an RF branch covering a first frequency band is valid if the UE is capable of performing relative phase and/or amplitude calibration of the Rx path and the Tx path of the RF branch.

By comparing the downlink reference signal (for example, a downlink reference signal of the second set of downlink reference signals) and the uplink reference signal (for example, an uplink reference signal of the first set of uplink reference signals) measured at the antenna port connected to the RF branch, a difference between the Rx path and the Tx path may be determined. In examples, the RF branch is valid if it is possible to compensate for the difference between the Rx path and the Tx path of the RF branch.

In some, but not necessarily all, examples, an RF branch covering a first frequency band is not valid if the UE is not capable of performing relative phase and/or amplitude calibration between the Rx path and the Tx path of the RF branch.

In some, but not necessarily all, examples, performing relative phase and/or amplitude calibration between an Rx path and a Tx path of an RF branch compensates for user equipment-dependent transfer functions in phase and/or time domain associated with the Rx path and the Tx path of the RF branch.

In some, but not necessarily all, examples, performing relative phase and/or amplitude calibration between the Rx path and the Tx path of the RF branch comprises applying precoding to a Tx signal to compensate for user-dependent transfer functions in phase and/or time domain associated with the Rx path and the Tx path of the RF branch.

In some, but not necessarily all, examples, relative phase calibration comprises delivering multiple timing offsets to the Rx path and the Tx path of the RF branch such that a phase difference between the Rx path and the Tx path of the RF branch is below a threshold.

In some, but not necessarily all, examples, relative amplitude calibration comprises delivering multiple power offsets to the Rx path and the Tx path of the RF branch such that an amplitude difference between the Rx path and the Tx path of the RF branch is below a threshold.

In some, but not necessarily all, examples, an RF branch covering a first frequency band is valid and Fully-Calibrated if phase and/or amplitude are reciprocal between the RX path and the TX path for the two or more antenna ports of the RF branch.

In some, but not necessarily all, examples, a validity of an RF branch covering a first frequency band is based, at least in part, on at least one of: a RF Front End reconfiguration, a coherency of the channel; movement and/or rotation of the UE; a time since the RF branch covering a first frequency band was last calibrated; an RF front end reconfiguration.

At block 814, the method 800 comprises determining, based on the identification of one or more valid RF branches covering a first frequency band, a number of valid RF branches covering the first frequency band.

At block 816, the method 800 comprises determining a number of available antenna ports covering the first frequency band.

In examples, block 816 comprises determining, for a valid RF branch, whether an antenna port, covering the first frequency band and connected to the RF branch, is available. In examples, block 816 comprises determining, for each valid RF branch, whether an antenna port, covering the first frequency band and connected to the RF branch, is available. Thus, in some but not necessarily all examples, the number of available antenna ports covering the first frequency band is equal to the total number of available antenna ports connected to valid RF branches.

In some, but not necessarily all examples, determining a number of available ports covering the first frequency band comprises: determining a number of antenna ports of the UE which cover the first frequency band; and determining how many of the antenna ports covering the first frequency band are in use, for example by another operation., The number of antenna ports covering the first frequency band is determined by subtracting the number of antenna ports which cover the first frequency band in use from the number of antenna ports in use.

In some, but not necessarily all, examples, determining if an antenna port connected to a valid RF branch is available comprises determining if the antenna port is in use, for example by another operation. If the antenna port is not in use, for example by another operation, the antenna port is available.

The other operation may include: multi-RAT-DC, UL-CA, Non-Stand-Alone 5G/6G, or another operation.

At block 818, the method 800 comprises determining a maximum number of available antenna ports for transmission within the first frequency band.

The determination is based at least in part on the determined number of valid RF branches covering the first frequency band and the determined number of antenna ports covering the first frequency band.

In some, but not necessarily all, examples, the maximum number of available antenna ports for transmission within the first frequency band is equal to the determined number of valid RF branches covering the first frequency band if the determined number of available antenna ports covering the first frequency band is equal to, or greater than, the determined number of valid RF branches covering the first frequency band and if all of the available antenna ports covering the first frequency band can be connected to all of the valid RF branches.

In some, but not necessarily all, examples, the maximum number of available antenna ports for transmission within the first frequency band is equal to the lower of the determined number of valid RF branches covering the first frequency band and the determined number of available antenna ports covering the first frequency band.

In some, but not necessarily all, examples, the method 800 comprises determining at least one of: a maximum number of fully-calibrated antenna ports available for transmission; or a maximum number of partially-calibrated antenna ports available for transmission.

The maximum number of fully-calibrated antenna ports available for transmission and/or the maximum number of partially-calibrated antenna ports available for transmission is dependent on the possible combinations of antenna ports for transmission.

In some, but not necessarily all examples, determining a maximum number of available, fully-calibrated antenna ports and/or a maximum number of available, partially-calibrated antenna ports
comprises determining a difference between one or more dynamic characteristics of a first antenna port of the two or more antenna ports and one or more corresponding dynamic characteristics of a second antenna port of the two or more antenna ports. Determination of the difference is based, at least in part, on a comparison of a measurement of a downlink reference signal measured at the first antenna port and a measurement of a downlink reference signal measured at the second antenna port.

In some, but not necessarily all examples, determining a maximum number of available, fully-calibrated antenna ports and/or a maximum number of available, partially-calibrated antenna ports comprises determining a relative phase and/or amplitude difference between two or more antenna ports. The determination is based on a comparison of one or more downlink reference signals of the first set of downlink reference signals.

In some, but not necessarily all examples, determining a maximum number of available, fully-calibrated antenna ports and/or a maximum number of available, partially-calibrated antenna ports comprises determining a difference between one or more dynamic characteristics of a first combination of two or more antenna ports and one or more corresponding dynamic characteristics of a second combination of two or more antenna ports. Determination of the difference is based, at least in part, on a comparison of a measurement of a downlink reference signal measured at the first combination of two or more antenna ports and a measurement of a downlink reference signal measured at the second combination of two or more antenna ports. The downlink reference signal could be the same or different downlink reference signals.

At block 820, the method comprises generating the multi-antenna port calibration capability indicator. In examples, the multi-antenna port calibration capability indicator is a multi-antenna port calibration capability indicator as described above.

Generating the multi-antenna port calibration capability indicator comprises generating an indication of the number of available antenna ports for transmission within the first frequency band.

In some, but not necessarily all, examples, the multi-antenna port calibration capability indicator indicates, for multiple supported combinations of antenna ports, at least one of: the maximum number of fully-calibrated antenna ports available for transmission within the first frequency band and the maximum number of partially-calibrated antenna ports available for transmission within the first frequency band.

In some, but not necessarily all, examples, the multi-antenna port calibration capability indicator indicates a number of antenna ports, connected to valid RF branches, available for transmission.

The multi-antenna port calibration capability indicator thus enables identification of which RF branches may be calibrated.

At block 822, the method 800 comprises transmitting the multi-antenna port calibration capability indicator to the network. In some examples, block 826 is carried out as block 302 of method 300 and/or as block 602 of method 600.

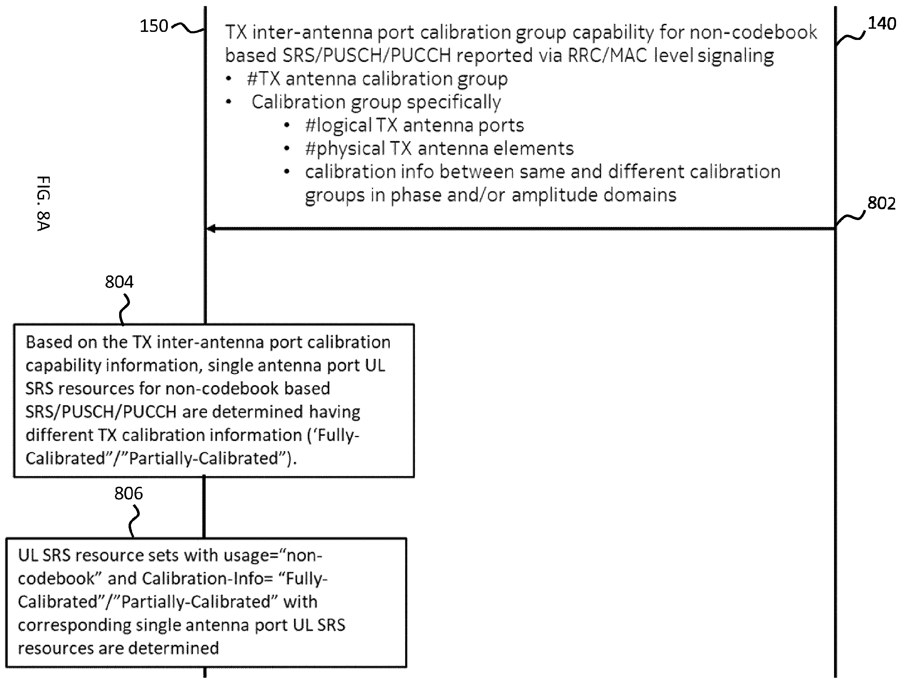

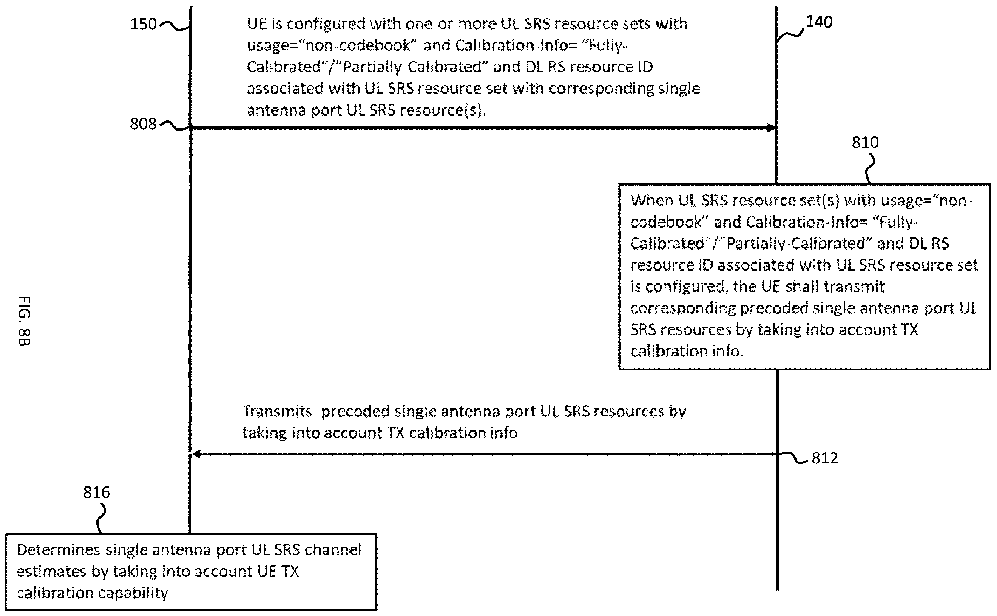

Consequently, FIG. 8 illustrates a method 800 of determining a multi-antenna port calibration capability of the UE, comprising:
obtaining an indication to initiate determination of the multi-antenna port calibration capability;
initiating determination of the multi-antenna port calibration capability in dependence upon obtaining the indication;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid RF branches covering a first frequency band;
determining, based on the identification of one or more valid RF branches covering a first frequency band, a number of valid RF branches covering the first frequency band; determining a number of available antenna ports covering the first frequency band; determining a maximum number of available antenna ports for transmission within the first frequency band;
generating the multi-antenna port calibration capability indicator; and transmitting the multi-antenna port calibration capability indicator to the network.

FIGs 8A and 8B illustrate a signalling diagram used in embodiments. In particular, FIGs 8A and 8B illustrate an example signaling flow diagram for TX inter-antenna port calibration capability reporting for PUSCH/PUSCH/PUCCH.

The signalling diagram of FIG. 8B continues directly from the signalling diagram of FIG. 8A.

At block 802, the UE 140 indicates TX inter-antenna port calibration group capability information for non-codebook based PUSCH and/or PUCCH and/or UL SRS resource transmission for a network. The TX inter-antenna port calibration group capability can indicate at least one of the following:
Number of TX antenna port calibration groups;
Number of UE logical TX antenna ports per TX antenna port calibration group;
Number of UE physical TX antenna elements/antenna connectors/radiators per TX antenna port calibration group;
Alternatively,
number of antenna elements/antenna connectors/radiators per horizontal dimension; number of antenna elements/antenna connectors/radiators per azimuth dimension; polarization order: number of polarization domains.

For each TX antenna port calibration group, TX calibration information defining UE TX calibration capability between same and/or different antenna port groups as:
Fully-calibrated TX antenna ports in phase and/or amplitude within antenna port group and/or between different antenna port groups or
Partially-calibrated TX antenna ports in phase and/or amplitude within antenna port group and/or between different antenna port groups. In other words, part/set of TX antenna ports are calibrated in amplitude/phase with each other within group or between different antenna ports groups or
None-calibrated antenna ports in phase and/or amplitude within antenna port group and/or between different antenna port groups

The TX inter-antenna port calibration group specific information can encapsulate all calibration combinations between different possible antenna port calibration groups.

Alternatively, symmetric TX calibration information between different antenna port calibration groups can be assumed, so only one TX calibration information between two groups is included as a part of TX calibration capability indication.

When the UE 140 reports inter-antenna port calibration information to be either Fully-calibrated or Partially-calibrated between two or more inter-antenna port calibration groups, it can be assumed that the UE 140 can transmit simultaneously single antenna port UL SRS resource(s) via UE logical antenna ports associated with different inter-antenna port calibration groups and corresponding physical antenna elements/connectors.

When more than two groups share same inter-antenna port calibration information, all combinations between different groups need to share the same calibration information. For example, in the case of three different groups, i.e. group#0, group#1, group#2. Group#0 need to have same inter-antenna port calibration info as with group#1, as well as with group#2. Similarly, group#1 need to share same inter-antenna port calibration info between groups#0,#1. Moreover, group#2 need to have same inter-antenna port group calibration info as between groups#0,#1.

For example, the UE 140 indicates via capability (e.g. RRC or MAC-level) signaling that it has a TX inter-antenna port group calibration capability for non-codebook based PUSCH where the UE 140 has 4 TX antenna groups, where 1st antenna port group has fully-calibrated antenna ports, 2nd antenna port group has fully-calibrated antenna ports, and 3rd antenna port group has partially calibrated antenna ports as well as 4th antenna port group has non-calibrated antenna ports.

At block 804, based on the UE 140 indicated TX inter-antenna port group calibration capability information, the network determines UL SRS single antenna port resource(s) such that reported one or more inter-antenna port groups sharing same TX antenna port group calibration information (i.e. either fully-calibrated or partially-calibrated) are determined as one single antenna port UL SRS resource.

It is up to the network how many actual UE logical TX antenna ports are captured within one single antenna port SRS resource (subject to reported capability).

The network can configure the UE 140 with UL SRS resource configuration where:
one or more UL SRS resource sets are configured with usage 'NonCodebook' and with new information element, 'Calibration-Info' associated with TX antenna port group calibration information (i.e. fully-Calibrated or Partially-Calibrated)
All single antenna port UL SRS resources within each UL SRS resource set share same TX antenna port group calibration information
UE 140 is assumed to have capability to transmit simultaneously all single antenna port UL SRS resources within UL SRS resource set.

It is assumed that inter antenna port calibration groups having calibration info as Non-calibrated can not applied for non-codebook based SRS/PUSCH/PUCCH transmission. Therefore, UL SRS resource set can not have Calibration-info as 'Non-calibrated'.

In one implementation example of 6G variant of the standard, UL SRS resource set specific calibration information element can be implemented as (underlined)

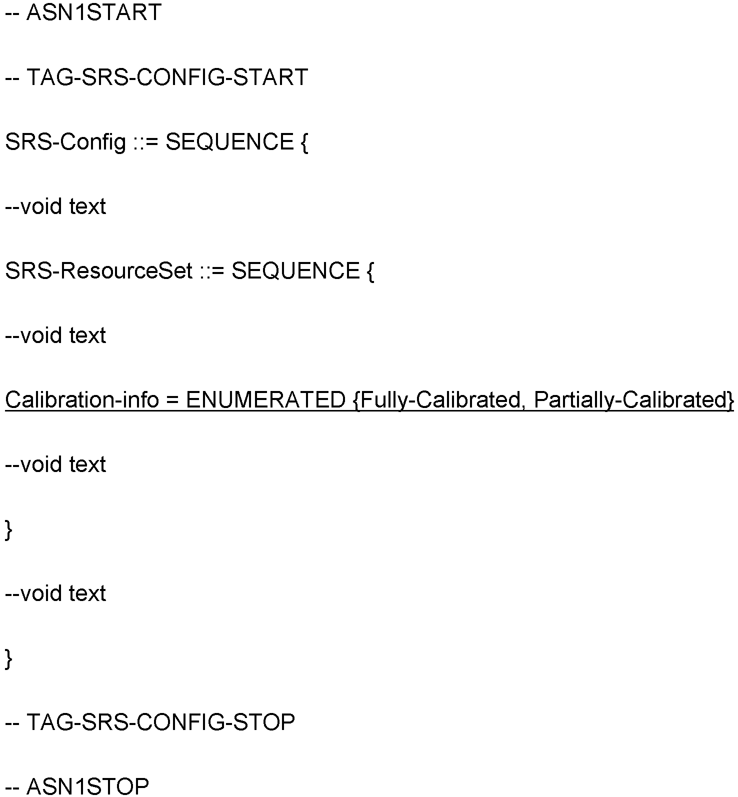

At block 810, upon reception of UL SRS configuration (e.g. via RRC)/activation (e.g. via MAC)/indication (e.g. via DCI), the UE 140 shall determine single antenna port UL SRS transmission as follows:
When UL SRS resource set is configured with usage 'non-codebook' and Calibration-Info = 'fully-Calibrated', the UE 140 determines precoder for the transmission single antenna port UL SRS resources based on DL measurement of an associated non-zero power (NZP)-Channel State Information (CSI) resource such that phase and/or amplitude are fully calibrated between different UE TX physical antenna elements. Same applies also for non-codebook based PUSCH/PUCCH transmission.

When UL SRS resource set is configured with usage 'non-codebook' and Calibration-Info = 'partially-Calibrated', the UE 140 determines precoder for the transmission single antenna port UL SRS resources based on DL measurement of an associated non-zero power (NZP)-Channel State Information (CSI) resource such that phase and/or amplitude are partially calibrated between different UE TX physical antenna elements. Same applies also for non-codebook based PUSCH/PUCCH transmission.

For a handheld UE to support Non-Code-Book based UL MIMO each of its configurable antennas must be connected to a RF-branch where the phase and amplitude is fully reciprocal between the Rx path and the Tx path. Antennas implemented on a handheld UE will have different unknown dynamic characteristics like directivity, complex impedance, and the angular direction of the maximum gain. A UE can quantify these differences in antenna characteristics by DL measurement at the baseband domain. This might require some specific DL reference signals or UL gaps to determine these differences. However, the DL characterization at the baseband domain is only useful for Non-Code-Book Based UL MIMO if the UE can ensure that the DL measured phase and amplitude difference can be applied at the used antenna for the UL signals. Ensuring Rx à Tx reciprocity will require additional hardware in the UE to perform these calibrations, as the calibration must be performed with a given periodicity due to the dynamic behavior of user influenced handheld UE.

A procedure for the UE to select the best RF-branch/antenna combinations for Non-Codebook-Based UL MIMO is described below.
The UE receives a txConfig for 'Noncodebook' UL MIMO via DCI
The UE will initiate its Rx à Tx calibrations for each RF-Branch, where each RF-branch can be connected to one or more antennas.

The UE will monitor appropriate DL Reference signals and/or granted UL gaps to perform the calibration.

The UE will prioritize invalid RF-Branch and antenna combinations with the best received and calibration RSPR values, as the UE might not know if it will be capable of calibrating all of its RF-Branch/antenna combination. The validity of a RF-branch/antenna calibration is dependent on the coherency of the channel and/or movement/rotation of the UE. As such, the time since that combination was last calibrated.

The UE determines a valid number RF-branch/antenna combinations for Non-Codebook-Based UL MIMO and links those to the defined calibration groups.

The UE signals the current calibration status as described in the sections above.

FIG. 3 illustrates methods performed by a system comprising interaction between different system entities. FIG. 3 also illustrates a collection of separate methods performed separately by the different system entities.

Fig 9A illustrates an example of a controller 900 suitable for use in an apparatus 110, 150. Implementation of a controller 900 may be as controller circuitry. The controller 900 may be implemented in hardware alone, have certain aspects in software including firmware alone or can be a combination of hardware and software (including firmware). The controller may be a controller of an apparatus or device such as a terminal node 110, for example a UE, or an network node 120, for example a gNB.

In examples, the controller can be comprised in an electronic device. Accordingly, in examples, there is provided an electronic device comprising a controller as described herein.

Implementation of a controller 900 may be as controller circuitry. The controller 900 may be implemented in hardware alone, have certain aspects in software including firmware alone or can be a combination of hardware and software (including firmware).

As illustrated in Fig 9A the controller 900 may be implemented using instructions that enable hardware functionality, for example, by using executable instructions 906 in a general-purpose or special-purpose processor 902 that may be stored on a machine readable storage medium (disk, memory etc.) to be executed by such a processor 902.

The processor 902 is configured to read from and write to the memory 904. The processor 902 may also comprise an output interface via which data and/or commands are output by the processor 902 and an input interface via which data and/or commands are input to the processor 902.

The memory 904 stores instructions, program, or code 906 that controls the operation of the apparatus 110, 120 when loaded into the processor 902. The computer program instructions, program or code am 906, provide the logic and routines that enables the apparatus 110, 120 to perform the methods illustrated in the accompanying FIGs. The processor 902 by reading the memory 904 is configured to load and execute the instructions, program, or code 906.

In some examples, the controller 900 is or is comprised in the UE 110. In some such examples, the apparatus 110, 120 comprises:
at least one processor 902; and
at least one memory 904 storing instructions that, when executed by the at least one processor 902, cause the apparatus at least to:
   transmit, to a network, an antenna port group calibration capability associated with non-codebook based precoding for uplink communications between the UE and the network, wherein the antenna port group calibration capability indicates a capability of the UE to perform relative phase and/or amplitude calibration between multiple antenna ports of the UE;
   transmit, to the network, an antenna port capability indicator comprising an indication of a size and/or an arrangement of the antenna ports of the UE;
   receive configuration information from a network node 120 of the network, wherein the configuration information comprises one or more antenna port supergroups, wherein an antenna port supergroup comprises one or more antenna port groups, and wherein an inter-group calibration indicator of the antenna port groups within the antenna port supergroup is fully-calibrated or partially-calibrated, and an indication to use a supergroup as a single uplink resource;
   determine precoding for uplink transmission between the UE and the network based on the received configuration information;
   precode at least one reference signal, to be transmitted using a supergroup, using the determined precoding for the supergroup;
   transmit, to the network, the at least one precoded reference signal by the supergroup associated with the precoding;
   receive, from the network, a supergroup indication for indicating which supergroup of the one or more antenna port supergroups is to be used for uplink transmission between the UE and the network; and
   enable uplink transmission between the UE and the network using the indicated supergroup.

In some examples, the controller 900 is or is comprised in the UE 110. In some such examples, the apparatus 110, 120 comprises:
at least one processor 902; and
at least one memory 904 storing instructions that, when executed by the at least one processor 902, cause the apparatus at least to:
   obtain an indication to initiate determination of the antenna port group calibration capability; initiate determination of the antenna port group calibration capability;
   measure one or more reference signals using one or more antenna ports;
   compare a measurement of a first measured reference signal against a measurement of a second measured reference signal;
   determine a difference between one or more dynamic characteristics of a first antenna port of the two or more antenna ports and one or more corresponding dynamic characteristics of a second antenna port of the two or more antenna ports;
   identify one or more valid combinations of two or more antenna ports;
   determine at least one of: one or more preferred combinations of one or more antenna ports, or one or more candidate combinations of one or more antenna ports;
   associate the one or more preferred combinations and/or the one or more candidate combinations of antenna ports with one or more antenna port groups;
   determine an intra-group calibration indicator for one or more of the antenna port groups; determine an inter-group calibration indicator for a combination of two or more antenna port groups;
   generate an antenna port group calibration capability indicator; and
   transmit the antenna port group calibration capability indicator to the network.

In some examples, the controller 900 is or is comprised in the network node 120. In some such examples, the apparatus 110, 120 comprises:
at least one processor 902; and
at least one memory 904 storing instructions that, when executed by the at least one processor 902, cause the apparatus at least to:
   receive, from a UE, an antenna port group calibration capability associated with non-codebook based precoding for uplink communications between the UE and the network;
   receive, from the UE, an antenna port capability indicator comprising an indication of a size and/or an arrangement of the antenna ports of the UE;
   determine, based at least one the received antenna port group calibration capability, one or more antenna port supergroups, wherein an antenna port supergroup comprises one or more antenna port groups, and wherein an inter-group calibration indicator of the antenna port groups within the antenna port supergroup is fully-calibrated or partially-calibrated;
   transmit configuration information to the UE, wherein the configuration information comprises the one or more antenna port supergroups, and an indication to use a supergroup as a single uplink resource;
   receive, from the UE, the at least one precoded reference signal;
   determine a channel estimate based on the received precoded reference signal;
   determine, based on the channel estimate, which supergroup of the one or more antenna port supergroups is to be used for uplink transmission between the UE and the network; transmit, to the UE, a supergroup indication for indicating which supergroup of the one or more antenna port supergroups is to be used for UL transmission between the UE and the network; and
   enable UL transmission between the UE and the NW using the indicated supergroup.

In some examples, there is a (computer implemented) system comprising a UE and a network node 120, the UE and/or the network node 120 comprising means for:
controlling transmission, to a network, an antenna port group calibration capability associated with non-codebook based precoding for uplink communications between the UE and the network, wherein the antenna port group calibration capability indicates a capability of the UE to perform relative phase and/or amplitude calibration between multiple antenna ports of the UE;
controlling transmission, to the network, an antenna port capability indicator comprising an indication of a size and/or an arrangement of the antenna ports of the UE;
controlling reception of configuration information from a network node 120 of the network, wherein the configuration information comprises one or more antenna port supergroups, wherein an antenna port supergroup comprises one or more antenna port groups, and wherein an inter-group calibration indicator of the antenna port groups within the antenna port supergroup is fully-calibrated or partially-calibrated, and an indication to use a supergroup as a single uplink resource;
controlling determination of precoding for uplink transmission between the UE and the network based on the received configuration information;
controlling precoding of at least one reference signal, to be transmitted using a supergroup, using the determined precoding for the supergroup;
controlling transmission, to the network, the at least one precoded reference signal by the supergroup associated with the precoding;
controlling reception, from the network, a supergroup indication for indicating which supergroup of the one or more antenna port supergroups is to be used for uplink transmission between the UE and the network; and
enabling uplink transmission between the UE and the network using the indicated supergroup.

In some examples, there is a (computer implemented) system comprising a UE and a network node 120, the UE and/or the network node 120 comprising means for:
controlling obtaining of an indication to initiate determination of the antenna port group calibration capability;
controlling initiation of determination of the antenna port group calibration capability; controlling measurement of one or more reference signals using one or more antenna ports; controlling comparison of a measurement of a first measured reference signal against a measurement of a second measured reference signal;
controlling determination of a difference between one or more dynamic characteristics of a first antenna port of the two or more antenna ports and one or more corresponding dynamic characteristics of a second antenna port of the two or more antenna ports;
controlling identification of one or more valid combinations of two or more antenna ports; controlling determination of at least one of: one or more preferred combinations of one or more antenna ports, or one or more candidate combinations of one or more antenna ports; controlling association of the one or more preferred combinations and/or the one or more candidate combinations of antenna ports with one or more antenna port groups;
controlling determination of an intra-group calibration indicator for one or more of the antenna port groups;
controlling determination of an inter-group calibration indicator for a combination of two or more antenna port groups;
controlling generation of an antenna port group calibration capability indicator; and controlling transmission of the antenna port group calibration capability indicator to the network.

As illustrated in Fig 9B, the instructions, program, or code 906 may arrive at the apparatus 110, 120 (not illustrated) via any suitable delivery mechanism 908. The delivery mechanism 908 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 906. The delivery mechanism may be a signal configured to reliably transfer the computer program 906. The apparatus 110, 120 may propagate or transmit the computer program 906 as a computer data signal.

The term "non-transitory" as used herein, is a limitation of the medium itself (i.e., tangible, not a signal) as opposed to a limitation on data storage persistency (e.g., RAM vs. ROM).

Computer program instructions for causing an apparatus to perform at least the following or for performing at least the following:
transmitting, to a network, an antenna port group calibration capability associated with non-codebook based precoding for uplink communications between the UE and the network,
wherein the antenna port group calibration capability indicates a capability of the UE to perform relative phase and/or amplitude calibration between multiple antenna ports of the UE;
transmitting, to the network, an antenna port capability indicator comprising an indication of a size and/or an arrangement of the antenna ports of the UE;
receiving configuration information from a network node 120 of the network, wherein the configuration information comprises one or more antenna port supergroups, wherein an antenna port supergroup comprises one or more antenna port groups, and wherein an inter-group calibration indicator of the antenna port groups within the antenna port supergroup is fully-calibrated or partially-calibrated, and an indication to use a supergroup as a single uplink resource;
determining precoding for uplink transmission between the UE and the network based on the received configuration information;
precoding at least one reference signal, to be transmitted using a supergroup, using the determined precoding for the supergroup;
transmitting, to the network, the at least one precoded reference signal by the supergroup associated with the precoding;
receiving, from the network, a supergroup indication for indicating which supergroup of the one or more antenna port supergroups is to be used for uplink transmission between the UE and the network; and
enabling uplink transmission between the UE and the network using the indicated supergroup.

Computer program instructions for causing an apparatus to perform at least the following or for performing at least the following:
obtaining an indication to initiate determination of the antenna port group calibration capability;
initiating determination of the antenna port group calibration capability;
measuring one or more reference signals using one or more antenna ports;
comparing a measurement of a first measured reference signal against a measurement of a second measured reference signal;
determining a difference between one or more dynamic characteristics of a first antenna port of the two or more antenna ports and one or more corresponding dynamic characteristics of a second antenna port of the two or more antenna ports;
identifying one or more valid combinations of two or more antenna ports;
determining at least one of: one or more preferred combinations of one or more antenna ports, or one or more candidate combinations of one or more antenna ports;
associating the one or more preferred combinations and/or the one or more candidate combinations of antenna ports with one or more antenna port groups;
determining an intra-group calibration indicator for one or more of the antenna port groups; determining an inter-group calibration indicator for a combination of two or more antenna port groups;
generating an antenna port group calibration capability indicator; and transmitting the antenna port group calibration capability indicator to the network.

Computer program instructions for causing an apparatus to perform at least the following or for performing at least the following:
receiving, from a UE, an antenna port group calibration capability associated with non-codebook based precoding for uplink communications between the UE and the network;
receiving, from the UE, an antenna port capability indicator comprising an indication of a size and/or an arrangement of the antenna ports of the UE;
determining, based at least one the received antenna port group calibration capability, one or more antenna port supergroups, wherein an antenna port supergroup comprises one or more antenna port groups, and wherein an inter-group calibration indicator of the antenna port groups within the antenna port supergroup is fully-calibrated or partially-calibrated; transmitting configuration information to the UE, wherein the configuration information comprises the one or more antenna port supergroups, and an indication to use a supergroup as a single uplink resource;
receiving, from the UE, the at least one precoded reference signal;
determining a channel estimate based on the received precoded reference signal; determining, based on the channel estimate, which supergroup of the one or more antenna port supergroups is to be used for uplink transmission between the UE and the network; transmitting, to the UE, a supergroup indication for indicating which supergroup of the one or more antenna port supergroups is to be used for UL transmission between the UE and the network; and
enabling UL transmission between the UE and the NW using the indicated supergroup.

The computer program instructions may be comprised in a computer program, a non-transitory computer readable medium, a computer program product, a machine readable medium. In some but not necessarily all examples, the computer program instructions may be distributed over more than one computer program.

Although the memory 904 is illustrated as a single component/circuitry it may be implemented as one or more separate components/circuitry some or all of which may be integrated/removable and/or may provide permanent/semi-permanent/ dynamic/cached storage.

Although the processor 902 is illustrated as a single component/circuitry it may be implemented as one or more separate components/circuitry some or all of which may be integrated/removable. The processor 902 may be a single core or multi-core processor.

The above disclosure requires new capability signaling with new information elements to be signaled which would be realized in 6G version of the standard.

Furthermore, 6G version of the standard would have new information elements in SRS-Config in SRS-ResourceSet or SRS-Resource definitions.

Furthermore, 6G version of would have corresponding configuration information in dedicated clause for SRS as well as clauses for non-codebook based PUSCH where UE procedure to transmit corresponding UL SRS resources are defined.

The present subject matter may comprise the following clauses.

Clause 1. A user equipment, UE, comprising means for determining an antenna port group calibration capability of the UE, wherein the antenna port group calibration capability depends on at least one of phase calibration or amplitude calibration of one or more antenna port groups of the UE.

Clause 2. A user equipment of clause 1, wherein determining the multi-antenna port calibration capability comprises generating a multi-antenna port calibration capability indicator associated with non-codebook-based precoding for uplink communications between the UE and a network, wherein the multi-antenna port calibration capability indicator indicates a capability of the UE to perform relative phase and/or amplitude calibration between multiple antenna ports of the UE.

Clause 3. A user equipment of clause 1 or 2, wherein determining the multi-antenna port calibration capability comprises measuring one or more reference signals using one or more antenna ports.

Clause 4. A user equipment of clause 3, wherein determining the multi-antenna port calibration capability comprises measuring symbols of the one or more reference signals. Clause 5. A user equipment of any of clauses 1 - 4, wherein determining the multi-antenna port calibration capability comprises comparing a measurement of a first measured reference signal against a measurement of a second measured reference signal, wherein the first reference signal is a downlink reference signal and the second reference signal is at least one of: a different measured reference signal; a reference signal measured at a different antenna port to the first measured reference signal; an uplink reference signal; or an expected reference signal.

Clause 6. A user equipment of clause 5, wherein determining the multi-antenna port precoding values comprises determining a difference between one or more dynamic characteristics of two or more antenna ports based, at least in part, on a comparison of a measurement of one or more downlink reference signals measured at the first antenna port and the second antenna port.

Clause 7. A user equipment of clause 5, wherein determining the multi-antenna port calibration capability comprises determining a difference between one or more dynamic characteristics of a first antenna port of the two or more antenna ports and one or more corresponding dynamic characteristics of a second antenna port of the two or more antenna ports based, at least in part, on a comparison of a measurement of one or more uplink reference signals measured at the first antenna port and a measurement of one or more uplink reference signals measured at the second antenna port.

Clause 8. A user equipment of clause 6 or 7, wherein the one or more dynamic characteristics comprise at least one of: directivity; complex impedance; angular direction of maximum gain; phase; amplitude.

Clause 9. A user equipment of any of clauses 5 - 8, comprising means for identifying one or more valid combinations of two or more antenna ports based, at least in part, on the comparison of the measurement of the first measured reference signal and the measurement of the second measured reference signal.

Clause 10. A user equipment of clause 9, wherein the identification of one or more valid combinations of two or more antenna ports is based, at least in part, on a comparison, for multiple antenna ports of the two or more antenna ports, of a measured downlink reference signal at the antenna port and a measured uplink reference signal at one or more antenna ports.

Clause 11. A user equipment of clause 9 or 10, wherein a combination of two or more antenna ports is valid and its calibration capability is fully-calibrated if the UE is capable of performing relative phase and/or amplitude calibration between the two or more antenna ports.

Clause 12. A user equipment of any of clauses 9 - 11, wherein a combination of two or more antenna ports is valid and its calibration capability is partially-calibrated if the UE is capable of performing relative phase and/or amplitude calibration between a subset of the two or more antenna ports.

Clause 13. A user equipment of any of clauses 9 - 12, wherein a combination of two or more antenna ports is not valid and its calibration capability is non-calibrated if the UE is not capable of performing relative phase and/or amplitude calibration between the two or more antenna ports within an antenna port group.

Clause 14. A user equipment of any of clauses 9 - 13, comprising means for determining one or more preferred combinations of one or more antenna ports, based at least in part on the identified one or more valid combinations of two or more antenna ports.

Clause 15. A user equipment of any of clauses 9 - 14, comprising means for determining one or more candidate combinations of one or more antenna ports, based at least in part on the identified one or more valid combinations of two or more antenna ports.

Clause 16. A user equipment of any of clauses 9 - 15, wherein determining one or more preferred combinations of one or more antenna ports and/or one or more candidate combinations of one or more antenna ports is based on a calibration capability of the one or more combinations of one or more antenna ports.

Clause 17. A user equipment of clause 16, wherein the means for determining one or more preferred combinations of one or more antenna ports and/or the means for determining one or more candidate combinations of one or more antenna ports are configured to select one or more valid and fully-calibrated combinations of one or more antenna ports as preferred combinations and/or candidate combinations in preference to one or more valid and partially-calibrated combinations of one or more antenna ports and/or selecting one or more valid and partially-calibrated combinations of one or more antenna ports as preferred combinations and/or candidate combinations in preference to one or more not valid and non-calibrated combinations of one or more antenna ports.

Clause 18. A user equipment of clause 16 or 17, wherein the means for determining one or more preferred combinations of one or more antenna ports and/or the means for determining one or more candidate combinations of one or more antenna ports are configured to: measure an RSRP of the one or more valid combinations of one or more antenna ports; and determine one or more preferred combinations of one or more antenna ports and/or one or more candidate combinations of one or more antenna ports in dependence upon the measured RSRP.

Clause 19. A user equipment of any of clauses 14 - 18, comprising means for associating the one or more preferred combinations and/or the one or more candidate combinations of antenna ports with one or more antenna port groups, wherein an antenna port group comprises at least the antenna ports of its associated one or more combinations of antenna ports.

Clause 20. A user equipment of clause 19, comprising means for determining an intra-group calibration indicator for one or more of the antenna port groups, wherein an intra-group calibration indicator indicates a capability of the UE to perform relative phase and/or amplitude calibration between multiple antenna ports within an antenna port group, in dependence upon a calibration capability of the one or more combinations of antenna ports associated with the antenna port group.

Clause 21. A user equipment of clause 20, comprising means for identifying an antenna port group as having an intra-group calibration capability of fully-calibrated, partially-calibrated, or non-calibrated in dependence upon a calibration capability of the associated one or more combinations of antenna ports.

Clause 22. A user equipment of clause 21, comprising means for determining an inter-group calibration indicator for a combination of two or more antenna port groups, wherein an inter-group calibration indicator indicates a capability of the UE to perform relative phase and/or amplitude calibration between two or more antenna port groups, in dependence upon a calibration capability of the one or more combinations of antenna ports associated with the two or more antenna port groups.

Clause 23. A user equipment of clause 22, wherein generating the multi-antenna port calibration capability indicator comprises generating an indication of: one or more antenna port groups; an intra-group calibration indicator of the one or more antenna port groups; and an inter-group calibration indicator of one or more combinations of the one or more antenna port groups.

Clause 24. A user equipment of any preceding clause, comprising means for: obtaining an indication to initiate determination of the multi-antenna port calibration capability; and initiating determination of the multi-antenna port calibration capability based on the indication.

Clause 25. A user equipment of clause 23, comprising means for receiving the indication from a network node, and/or means for generating the indication based on a trigger condition being met.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   i. a combination of analog and/or digital hardware circuit(s) with software/firmware and
   ii. any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program [REF3]. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 110, 120 can, for example be a module. A controller 900 of the apparatus 110, 120 can, for example be a module.

Where a structural feature has been described, it may be replaced by means for performing one or more of the functions of the structural feature whether that function or those functions are explicitly or implicitly described.

The radio frequency circuitry and the antenna may be configured to operate in a plurality of operational resonant frequency bands. For example, the operational frequency bands may include (but are not limited to) Long Term Evolution (LTE) (US) (734 to 746 MHz and 869 to 894 MHz), Long Term Evolution (LTE) (rest of the world) (791 to 821 MHz and 925 to 960 MHz), amplitude modulation (AM) radio (0.535-1.705 MHz); frequency modulation (FM) radio (76-108 MHz); Bluetooth (2400-2483.5 MHz); wireless local area network (WLAN) (2400-2483.5 MHz); hiper local area network (HiperLAN) (5150-5850 MHz); global positioning system (GPS) (1570.42-1580.42 MHz); US - Global system for mobile communications (US-GSM) 850 (824-894 MHz) and 1900 (1850 - 1990 MHz); European global system for mobile communications (EGSM) 900 (880-960 MHz) and 1800 (1710 - 1880 MHz); European wideband code division multiple access (EU-WCDMA) 900 (880-960 MHz); personal communications network (PCN/DCS) 1800 (1710-1880 MHz); US wideband code division multiple access (US-WCDMA) 1700 (transmit: 1710 to 1755 MHz , receive: 2110 to 2155 MHz) and 1900 (1850-1990 MHz); wideband code division multiple access (WCDMA) 2100 (transmit: 1920-1980 MHz, receive: 2110-2180 MHz); personal communications service (PCS) 1900 (1850-1990 MHz); time division synchronous code division multiple access (TD-SCDMA) (1900 MHz to 1920 MHz, 2010 MHz to 2025 MHz), ultra wideband (UWB) Lower (3100-4900 MHz); UWB Upper (6000-10600 MHz); digital video broadcasting - handheld (DVB-H) (470-702 MHz); DVB-H US (1670-1675 MHz); digital radio mondiale (DRM) (0.15-30 MHz); worldwide interoperability for microwave access (WiMax) (2300-2400 MHz, 2305-2360 MHz, 2496-2690 MHz, 3300-3400 MHz, 3400-3800 MHz, 5250-5875 MHz); digital audio broadcasting (DAB) (174.928-239.2 MHz, 1452.96- 1490.62 MHz); radio frequency identification low frequency (RFID LF) (0.125-0.134 MHz); radio frequency identification high frequency (RFID HF) (13.56-13.56 MHz); radio frequency identification ultra high frequency (RFID UHF) (433 MHz, 865-956 MHz, 2450 MHz), frequency allocations for 5G may include e.g. 700MHz, 410 MHz - 7125 MHz (FR1), 24250 MHz - 52600 MHz (FR2), 3.6-3.8GHz, 24.25-27.5GHz, 31.8-33.4GHz, 37.45-43.5, 66-71GHz, mmWave, and > 24GHz).

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following:" and "at least one of" and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. A user equipment, UE, comprising means for determining an antenna port group calibration capability of the UE,
wherein the antenna port group calibration capability depends on at least one of phase calibration or amplitude calibration of one or more antenna port groups of the UE.

2. A user equipment as claimed in claim 1, wherein determining the multi-antenna port calibration capability comprises generating a multi-antenna port calibration capability indicator associated with non-codebook-based precoding for uplink communications between the UE and a network, wherein the multi-antenna port calibration capability indicator indicates a capability of the UE to perform relative phase and/or amplitude calibration between multiple antenna ports of the UE.

3. A user equipment as claimed in any of claims 1 - 2, comprising means for identifying one or more valid combinations of two or more antenna ports based, at least in part, on the comparison of the measurement of the first measured reference signal and the measurement of the second measured reference signal, wherein the identification of one or more valid combinations of two or more antenna ports is based, at least in part, on a comparison, for multiple antenna ports of the two or more antenna ports, of a measured downlink reference signal at the antenna port and a measured uplink reference signal at one or more antenna ports.

4. A user equipment as claimed in claim 3 , wherein a combination of two or more antenna ports is valid and its calibration capability is fully-calibrated if the UE is capable of performing relative phase and/or amplitude calibration between the two or more antenna ports.

5. A user equipment as claimed in any of claims 3 - 4, wherein a combination of two or more antenna ports is valid and its calibration capability is partially-calibrated if the UE is capable of performing relative phase and/or amplitude calibration between a subset of the two or more antenna ports.

6. A user equipment as claimed in any of claims 3 - 5, wherein a combination of two or more antenna ports is not valid and its calibration capability is non-calibrated if the UE is not capable of performing relative phase and/or amplitude calibration between the two or more antenna ports within an antenna port group.

7. A user equipment as claimed in any of claims 3 - 6, comprising means for determining one or more preferred combinations of one or more antenna ports, based at least in part on the identified one or more valid combinations of two or more antenna ports.

8. A user equipment as claimed in any of claims 3 - 7, comprising means for determining one or more candidate combinations of one or more antenna ports, based at least in part on the identified one or more valid combinations of two or more antenna ports.

9. A user equipment as claimed in any of claims 3 - 8, wherein determining one or more preferred combinations of one or more antenna ports and/or one or more candidate combinations of one or more antenna ports is based on a calibration capability of the one or more combinations of one or more antenna ports.

10. A user equipment as claimed in any of claims 14 - 18, comprising means for associating the one or more preferred combinations and/or the one or more candidate combinations of antenna ports with one or more antenna port groups, wherein an antenna port group comprises at least the antenna ports of its associated one or more combinations of antenna ports.

11. A user equipment as claimed in claim 10, comprising means for determining an intra-group calibration indicator for one or more of the antenna port groups, wherein an intra-group calibration indicator indicates a capability of the UE to perform relative phase and/or amplitude calibration between multiple antenna ports within an antenna port group, in dependence upon a calibration capability of the one or more combinations of antenna ports associated with the antenna port group.

12. A user equipment as claimed in claim 11, comprising means for identifying an antenna port group as having an intra-group calibration capability of fully-calibrated, partially-calibrated, or non-calibrated in dependence upon a calibration capability of the associated one or more combinations of antenna ports.

13. A user equipment as claimed in claim 12, comprising means for determining an inter-group calibration indicator for a combination of two or more antenna port groups, wherein an inter-group calibration indicator indicates a capability of the UE to perform relative phase and/or amplitude calibration between two or more antenna port groups, in dependence upon a calibration capability of the one or more combinations of antenna ports associated with the two or more antenna port groups.

14. A user equipment as claimed in claim 13, wherein generating the multi-antenna port calibration capability indicator comprises generating an indication of: one or more antenna port groups; an intra-group calibration indicator of the one or more antenna port groups; and an inter-group calibration indicator of one or more combinations of the one or more antenna port groups.

15. A user equipment as claimed in any preceding claim, comprising means for receiving the indication from a network node, and/or means for generating the indication based on a trigger condition being met.
